# EUROPEAN PATENT SPECIFICATION

(11) **EP 3 299 402 B1**
(45) Date of publication and mention of the grant of the patent: **03.04.2019**
(21) Application number: 16189908.3
(22) Date of filing: 21.09.2016
(51) Int. Cl.: C08G 4/00, C08L 59/00, C08G 65/34, C09K 3/10, C09J 159/00, C08L 101/06, C09J 201/06

(54) **TWO-COMPONENT COMPOSITION BASED ON COMPOUNDS WITH AT LEAST TWO EXO-VINYLENE CYCLIC CARBONATE UNITS**
ZWEIKOMPONENTENZUSAMMENSETZUNG AUF BASIS VON VERBINDUNGEN MIT MINDESTENS ZWEI EINHEITEN AUS CYCLISCHEM EXO-VINYLEN-CARBONAT
COMPOSITION À DEUX COMPOSANTS À BASE DE COMPOSÉS AYANT AU MOINS DEUX UNITÉS DE CARBONATE CYCLIQUE EXO-VINYLÈNE

(43) Date of publication of application: 28.03.2018
(73) Proprietor: Henkel AG & Co. KGaA, 40589 Düsseldorf (DE)
(72) Inventor: HARTMANN, Olaf, 40235 Düsseldorf (DE); GARCIA MIRALLES, Jose, 40217 Düsseldorf (DE); KINZELMANN, Hans-Georg, 50259 Pulheim (DE); STRÜMPF, Svenja, 42699 Solingen (DE); KUTTER, Juliane, 40215 Düsseldorf (DE); LICHT, Ulrike, 68309 Mannheim (DE); LEONHARDT, Viktoria, 67063 Ludwigshafen (DE); MORMUL, Verena, 68161 Mannheim (DE); SCHUMACHER, Karl-Heinz, 67433 Neustadt (DE); BOERZSOENYI, Gabor, 60528 Frankfurt a. M. (DE); KLOPSCH, Rainer, 67551 Worms (DE)

(56) References cited:
- US-A1- 2015 315 310
- US-A1- 2016 186 008

## Description

### FIELD OF THE INVENTION

This application is directed to two-component compositions of which the first component comprises one or more compounds having two or more exo-vinylene cyclic carbonate units and of which the second component comprises a hardener. More particularly, the application is directed to two-component compositions, having utility as adhesives or sealants, of which the first component comprises one or more compounds having two or more exo-vinylene cyclic carbonate units, the exo-vinylene cyclic carbonate units being linked to one another by at least one organic, siloxane-free linking group, which is not bound directly to the exo-vinylene double bonds, and wherein linking groups formed by the polymerization of (meth)acrylic monomers are excluded.

### BACKGROUND OF THE INVENTION

Two-component systems, in which isocyanate components are reacted with polyol components to form a high-molecular-weight polyurethane polymer, are often used as sealants or adhesives. These systems are applied either as solvent-free and anhydrous reactive 100% systems or as sealants and adhesives containing an organic solvent. The sealants and adhesives are applied by means of a suitable application system to a first substrate and then optionally hardened after evaporation of the solvent.

The isocyanates present in such conventional sealants or adhesives represent a toxicological risk. This relates, on the one hand, to the processing of these sealants or adhesives during their use, because the isocyanates normally have a high toxicity and a high allergenic potential. On the other hand, there is the risk that, in flexible substrates, incompletely reacted aromatic isocyanate migrates through the substrate and is there hydrolyzed by moisture or water-containing components to carcinogenic aromatic amines.

Isocyanate-free two-component systems for hardenable sealant or adhesive compositions which have good hardening properties, ideally even at room temperature, are therefore desirable. And it has already been recognized in the art that exo-vinylene cyclic carbonates, which can react with amines to form urethanes at room temperature, could represent an important alternative to polyurethane formation by the aforementioned isocyanate / polyol reactions.

WO 2011/157671 (BASF SE) discloses a cyclic carbonate compound with a double bond directly in the ring system, which is also called an exo-vinylene cyclic carbonate. No compounds with two or more exo-vinylene cyclic carbonate compounds are described in this citation.

Compounds with two exo-vinylene cyclic carbonate groups, which are linked to one another by a direct bond between the vinylene groups, are described in US Patent No. 3,541,087 (Air Reduction Co. Inc). Coating materials containing a compound with at least two cyclic exo-vinylene carbonate groups linked to one another by a siloxane group are described in WO 2015/010924 (BASF SE). Polymerizable alkylidene-1,3-dioxolan-2-ones are described in WO 2013/144299 (BASF SE), the polymerization occurring via an ethylenically unsaturated group which is located as a substituent via a spacer on the alkylidene group. Coating material compositions are described in WO 2015/039807 (BASF Coatings GMBH) which contain *inter alia* an oligomeric or polymeric compound having at least two alkylidene-1,3-dioxolan-2-one groups: specifically the linking of the dioxolanones in this case occurs via the alkylidene groups.

WO 2015/164703 and WO 2015/164692 (both Valspar Sourcing Inc.) disclose polycyclocarbonate compounds and polymers made from such compounds. Enabling disclosures are only presented for compounds with two polycyclocarbonate groups.

US 2016/0186008 refers to a composition comprising a compound having at least two cyclic carbonate groups and a siloxane group.

US 2015/315310 discloses a process for the preparation of a hydrocarbon polymer comprising two end groups having 2-oxo-1,3-diolan-4-yl final parts by ring opening metathesis in the presence of a metathesis catalyst, of a chain transfer agent comprising a carbonate ring and a compound comprising at least one C6-C16 ring having a carbon-carbon double bond.

Acrylate monomers, which contain an exo-vinylene cyclic carbonate group, are described in the presently unpublished European Patent Application No. 15164 849.0. Multifunctional derivatives (copolymers) from these monomers are described in the presently unpublished European Patent Application No. 15 172 703.9. Nevertheless, these derivatives and monomers must be synthesized using a number of steps with a considerable loss of yield.

The object of the invention is to synthesize from the simplest possible precursors a compound that contains more than one exo-vinylene cyclic carbonate group and to utilize the same as a reactive structural unit for isocyanate-free two-component (2K) compositions, which compositions can harden at low temperature and ideally even at room temperature.

### STATEMENT OF THE INVENTION

In accordance with a first aspect of the present invention there is provided a composition, as defined in the appended claims, having two separate, reactive components that when mixed together form a reactive mixture that undergoes curing or hardening, said two-component composition comprising:
i) in a first component, at least one compound (VCC) having two or more exo-vinylene cyclic carbonate units, wherein said exo-vinylene cyclic carbonate units are bonded to one another by means of at least one organic, siloxane-free linking group, wherein said linking group is not directly bonded to the exo-vinylene double bonds and linking groups formed by polymerization of (meth)acrylic monomers are excluded; and,
ii) in a second component, at least one multifunctional hardener that has at least two functional groups (F) selected from the group consisting of primary amino groups, secondary amino groups, hydroxy groups, phosphine groups, phosphonate groups, and mercaptan groups,
wherein the compound (VCC) of said first component is characterized in that it has at least one acetal group in the linking group.

In the first component, the compound (VCC) the exo-vinylene cyclic carbonate units are desirably 5-alkylidene-1,3-dioxolan-2-one units of general formula (I): 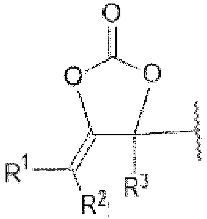 wherein:
the at least one organic, siloxane-free linking group is located between the 4 positions of the 5-alkylidene-1,3-dioxolan-2-one units; and,
R¹ to R³ are, independently of one another, hydrogen or an organic functional group.

Typically, the total amount of multifunctional hardener present in the second component is selected so that the molar ratio of functional alkylidene-1,3-dioxolan-2-one groups of said first component to the functional groups (F) in the hardener is in the range of from 1:10 to 10:1, preferably in the range of from 1:2 to 2:1. The total amount of multifunctional hardener in the second component of the composition may also be defined as being from 0.1 to 50 wt.%, preferably from 1 to 30 wt.%, based on the combined total amount of exo-vinylene cyclic carbonate compounds and said multifunctional hardeners.

In the second component, it is preferred that the functional groups (F) of the multifunctional hardener are aliphatic groups and, in particular, that the functional groups (F) of the hardener are selected from the group consisting of: aliphatic hydroxyl groups; aliphatic primary amino groups; aliphatic secondary amino groups; and, mixtures thereof.

In a first important embodiment, the multifunctional hardener comprises at least one of a multifunctional polyetheramine and a difunctional amine selected from the group consisting of aliphatic, cycloaliphatic and aromatic diamines. In an independent but not mutually exclusive embodiment, the multifunctional hardener comprises one or more alcohols selected from the group consisting of: 1,4-butanediol; ethylene glycol; diethylene glycol; triethylene glycol; neopentyl glycol; 1,3-propanediol; 1,5-pentanediol; 1,6-hexanediol; glycerol; diglycerol; pentaerythritol; dipentaerythritol; and, sugar alcohols, such as sorbitol and mannitol. And in a further embodiment - which is again not intended to be mutually exclusive of alternative hardener compositions - the multifunctional hardener comprises one or more polymeric polyols selected from the group consisting of polyester polyols, polycarbonate polyols, polyether polyols, polyacrylate polyols and polyvinyl alcohols, wherein said polymeric polyol hardeners are characterized by one or more of the following properties: i) an average OH functionality of at least 1.5 mol; ii) a number average molecular weight (Mn) of from 250 to 50,000 g/mol; and, iii) at least 50 mole % of the hydroxyl groups contained in the polymeric polyol being primary hydroxyl groups. It is noted for completeness, that the polymeric polyol hardeners may possess one, two or three of the stated characteristics (i) to iii).

It is preferred that the two-component composition comprises less than 0.1 wt.%, based on the weight of the two-component composition, of water. Further, it is also preferred that the two-component composition comprises less than 0.1 wt.%, based on the weight of the two-component composition, of NCO groups.

In accordance with the second aspect of the present invention, there is provided the use of the above defined two-component composition in sealants or adhesives.

In accordance with a third aspect of the invention, there is provided a method of forming a composite article comprising the steps of: a) providing first and second substrates; b) applying the two-component composition as defined in any one of claims 1 to 20 to at least one of said substrates; and, c) assembling said first and second substrates. The present invention also encompasses composite articles obtained by such method.

The invention in particular relates to:
1. A two-component sealant and/or adhesive composition comprising:
   i) in a first component, at least one compound (VCC) having two or more exo-vinylene cyclic carbonate units, wherein said exo-vinylene cyclic carbonate units are bonded to one another by means of at least one organic, siloxane-free linking group, wherein said linking group is not directly bonded to the exo-vinylene double bonds and linking groups formed by polymerization of (meth)acrylic monomers are excluded; and,
   ii) in a second component, at least one multifunctional hardener that has at least two functional groups (F) selected from the group consisting of primary amino groups, secondary amino groups, hydroxy groups, phosphine groups, phosphonate groups, and mercaptan groups,
   wherein the compound (VCC) of said first component is characterized in that it has at least one acetal group in the linking group.
2. The two-component composition according item 1, wherein in said compound (VCC) the exo-vinylene cyclic carbonate units are 5-alkylidene-1,3-dioxolan-2-one units of general formula (I): 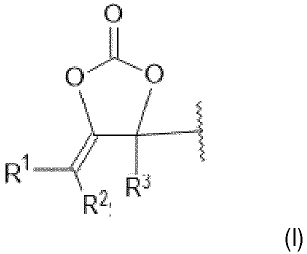 wherein:
   the at least one organic, siloxane-free linking group is located between the 4 positions of the 5-alkylidene-1,3-dioxolan-2-one units; and,
   R¹ to R³ are, independently of one another, hydrogen or an organic functional group.
3. The two-component composition according to item 1 or 2, wherein the linking group of said compound (VCC) has at least one acetal group.
4. The two-component composition according to any one of items 1 to 3, wherein the compound (VCC) meets either:
   i) Formula (II): 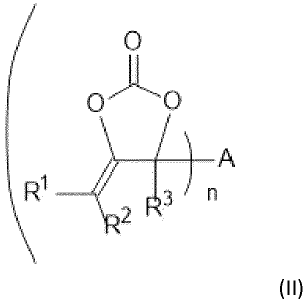 wherein:
      R¹ to R³ are, independently of one another, hydrogen or an organic functional group;
      n is a number that is greater than or equal to 2, preferably from 2 to 10; and,
      A is a siloxane-free organic linking group, with the exception of a linking group formed by polymerization of (meth)acrylic monomers;
   ii) Formula (III): 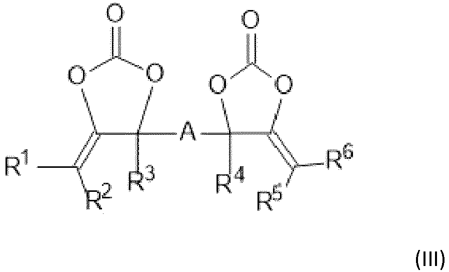 wherein:
      R¹ to R⁶ are, independently of one another, hydrogen or an organic functional group; and,
      A is a siloxane-free organic linking group comprising at least one acetal group, with the exception of a linking group formed by polymerization of (meth)acrylic monomers;
   iii) Formula (IV): 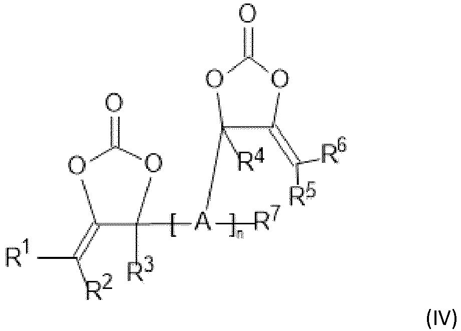 wherein:
      R¹ to R⁶ are, independently of one another, hydrogen or an organic functional group;
      R⁷ is hydrogen, an OH group or an organic functional group;
      A is a siloxane-free organic linking group, with the exception of a linking group formed by polymerization of (meth)acrylic monomers; and,
      n is a number that is greater than or equal to 1, preferably from 1 to 10;
      or,
   iv) Formula (V), 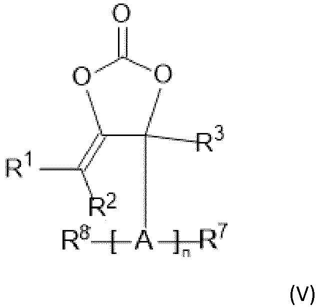 wherein:
      R¹ to R³ are, independently of one another, hydrogen or an organic functional group;
      R⁷ and R⁸ are, independently of one another, hydrogen, an OH group or an organic functional group, and R⁷ and/or R⁸ can contain an exo-vinylene cyclic carbonate group;
      A is a siloxane-free organic linking group, with the exception of a linking group formed by polymerization of (meth)acrylic monomers; and
      n is a number that is greater than or equal to 1 if at least one of the functional groups R⁷ and R⁸ contains at least one exo-vinylene cyclic carbonate group, and n is a number that is greater than or equal to 2, preferably from 2 to 10, if neither of the functional groups R⁷ and R⁸ contains an exo-vinylene cyclic carbonate group.
5. The two-component composition according to item 4, wherein -A in said Formulas (II), (III), (IV) and (V) has at least one acetal group.
6. The two-component composition according to item 4 or item 5, wherein -A in said Formula (II) means -B-Q and wherein -A in said Formula (III) means -B-Q-B-, in which formulae:
   B is a divalent hydrocarbon group; and,
   Q is an organic functional group that contains at least one functional group selected from ether groups, polyether groups, ester groups, polyester groups, amide groups, polyamide groups, urethane groups, polyurethane groups, urea groups, polyurea groups, acetal groups and polyacetal groups.
7. The two-component composition according to item 4 or item 5, wherein the compound (VCC) meets either:
   i) Formula (IVa): 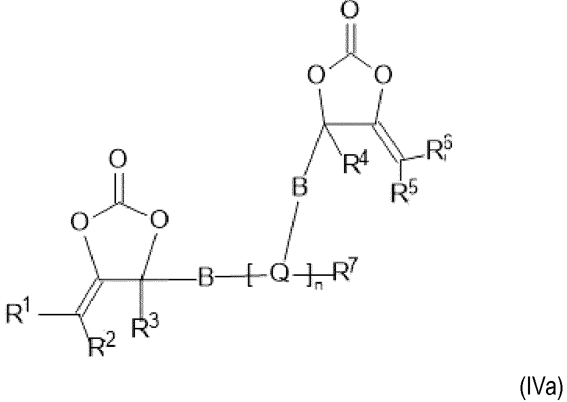
   or, ii) Formula (Va): 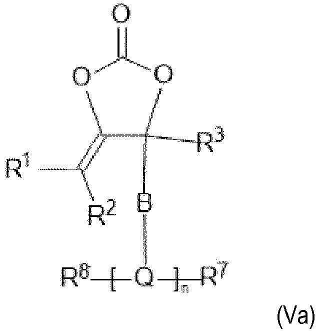 wherein in said Formulae:
      R¹ to R⁶ are, independently of one another, hydrogen or an organic functional group;
      R⁷ and R⁸ are, independently of one another, hydrogen, an OH group or an organic functional group;
      B is a divalent hydrocarbon group in each case;
      Q is an organic functional group in each case that preferably contains at least one functional group selected from ether groups, polyether groups, ester groups, polyester groups, amide groups, polyamide groups, urethane groups, polyurethane groups, urea groups, polyurea groups, acetal groups and polyacetal groups;
      n in Formula (IVa) is a number that is greater than or equal to 1, preferably from 1 to 10; and,
      n in Formula (Va) is a number that is greater than or equal to 1 if at least one of the functional groups R⁷ and R⁸ contains at least one exo-vinylene cyclic carbonate group, and n is a number that is greater than or equal to 2, preferably from 2 to 10, if neither of the functional groups R⁷ and R⁸ contains an exo-vinylene cyclic carbonate group.
8. The two-component composition according to one of items 4 to 7, wherein:
   R¹, R², R⁵ and R⁶ represent, independently of one another, a C1 to C10 alkyl group or preferably an H atom; and
   R³ and R⁴ represent, independently of one another, a C1 to C10 alkyl group or an H atom, preferably a methyl group.
9. The two-component composition according to one of items 4 to 8, wherein the compound (VCC) meets either:
   i) Formula (Vb): 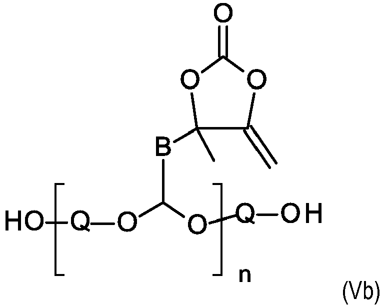
   ii) Formula (Vc): 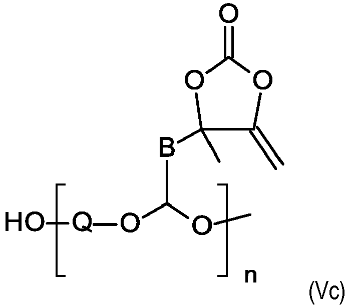
   iii) Formula (IVb): 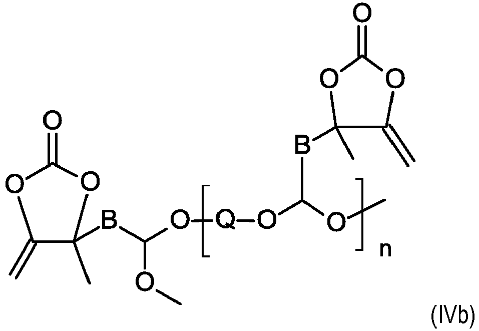 or,
   iv) Formula (VI): 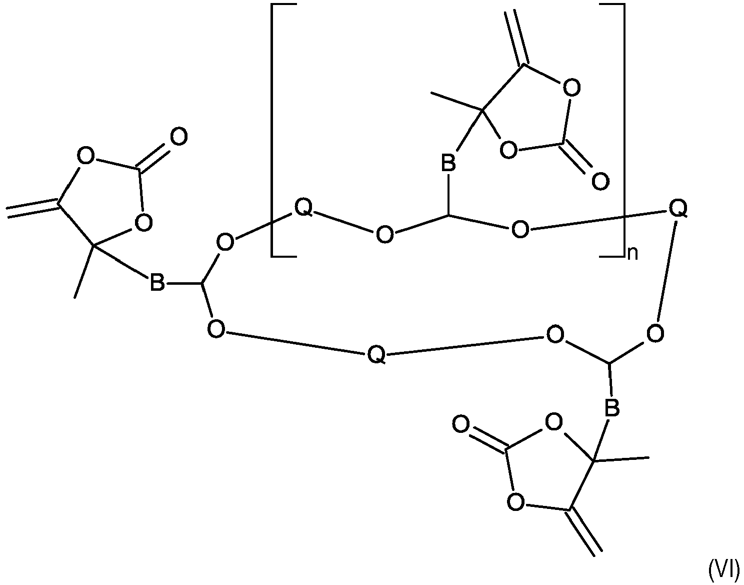 wherein:
      B is an alkylene group preferably having from 1 to 6 carbon atoms;
      Q is a group derived from a polyol, a polyol being an alcohol having at least two hydroxyl groups;
      n in formulae (Vb) and (Vc) is a number that is greater than or equal to 2, preferably from 2 to 10;
      n in formula (IVb) is a number that is greater than or equal to 1, preferably from 1 to 10; and,
      n in formula (VI) is a number that is greater than or equal to 0, preferably from 0 to 10.
10. The two-component composition according to one of items 4 to 9, wherein the compound (VCC) meets either:
   i) Formula (Via): 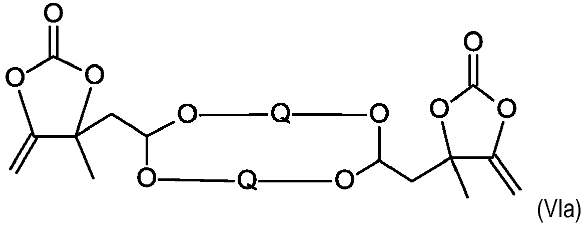
   ii) Formula (IVc): 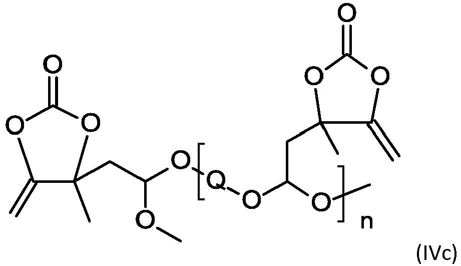
   iii) Formula (Vd): 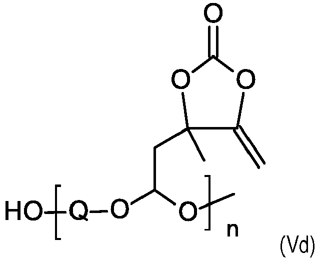 or,
   iv) Formula (Ve): 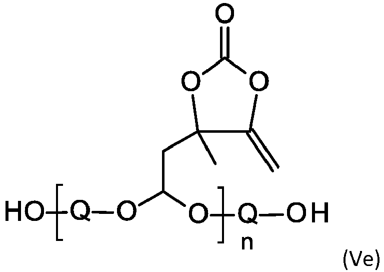 wherein in said Formulae Via, IVc, Vd and Ve:
      -O-Q-O- represents the functional group of a divalent alcohol, preferably selected from ethylene glycol, 1,3-propanediol, 1,4-butanediol, diethylene glycol, triethylene glycol, neopentyl glycol, 1,5-pentanediol, 1,6-hexanediol, 1,8-octanediol, 3-methyl-1,5-pentanediol, 1,4-bis(hydroxymethyl)cyclohexane, 1,6-bis(hydroxymethyl)cyclohexane, glycerol, diglycerol, polyethylene glycol, polypropylene glycol, PolyTHF, pentaerythritol, dipentaerythritol and sugar alcohols;
      n in formula (IVc) is 1, 2 or 3; and,
      n in formulae (Vd) and (Ve) is a number that is greater than or equal to 2, preferably 2 or 3.
11. The two-component composition according to any one of items 4 to 10, wherein:
   R¹, R², R⁵ and R⁶ each represent an H atom;
   R³ and R⁴ represent, independently of one another, methyl or an H atom;
   R⁷, R⁸ and A represent, independently of one another, functional groups of polyhydric alcohols having from 2 to 12 carbon atoms that can also be interrupted by -O-, -S- or-NR₂-groups, R representing H or a C1 to C12 alkyl.
12. The two-component composition according to any one of items 1 to 11, wherein the total amount of multifunctional hardener present in the second component is selected so that the molar ratio of functional alkylidene-1,3-dioxolan-2-one groups of said first component to the functional groups (F) in the hardener is in the range of from 1:10 to 10:1, preferably in the range of from 1:2 to 2:1.
13. The two-component composition according to any one of items 1 to 12, wherein the total amount of multifunctional hardener present in the second component is from 0.1 to 50 wt.%, preferably from 1 to 30 wt.%, based on the combined total amount of exo-vinylene cyclic carbonate compounds and said multifunctional hardeners.
14. The two-component composition according to any one of items 1 to 13, wherein the functional groups (F) of the hardener are selected from the group consisting of: aliphatic hydroxyl groups; aliphatic primary amino groups; aliphatic secondary amino groups; and, mixtures thereof.
15. The two-component composition according to any one of items 1 to 14, wherein the multifunctional hardener comprises at least one of a multifunctional polyetheramine and a difunctional amine selected from the group consisting of aliphatic, cycloaliphatic and aromatic diamines.
16. The two-component composition according to any one of items 1 to 15, wherein the multifunctional hardener comprises one or more alcohols selected from the groups consisting of: 1,4-butanediol; ethylene glycol; diethylene glycol; triethylene glycol; neopentyl glycol; 1,3-propanediol; 1,5-pentanediol; 1,6-hexanediol; glycerol; diglycerol; pentaerythritol; dipentaerythritol; and, sugar alcohols, such as sorbitol and mannitol.
17. The two-component composition according to any one of items 1 to 16, wherein:
   the multifunctional hardener comprises one or more polymeric polyols selected from the group consisting of polyester polyols, polycarbonate polyols, polyether polyols, polyacrylate polyols and polyvinyl alcohols; and,
   said polymeric polyol hardeners are characterized by one or more of the following properties:
      i) an average OH functionality of at least 1.5 mol;
      ii) a number average molecular weight (Mn) of from 250 to 50,000 g/mol; and,
      iii) at least 50 mole % of the hydroxyl groups contained in the polymeric polyol being primary hydroxyl groups.
18. The two-component composition according to any one of items 1 to 17 further comprising a catalyst in an amount of from 0.01 to 10 wt.%, preferably from 0.01 to 5 wt.%, based on the total weight of the two-component composition.
19. The two-component composition according to any one of items 1 to 18 comprising less than 0.1 wt.%, based on the weight of the two-component composition, of water.
20. The two-component composition according to any one of items 1 to 19 comprising less than 0.1 wt.%, based on the weight of the two-component composition, of NCO groups.
21. The use of the two-component composition as defined in any one of items 1 to 20 in sealants and/or adhesives.
22. A method of forming a composite article comprising the steps of:
   a) providing first and second substrates;
   b) applying the two component composition as defined in any one of items 1 to 20 to at least one of said substrates; and,
   c) assembling said first and second substrates.

### DEFINITIONS

As used herein, the singular forms "a", "*an*" and "*the*" include plural referents unless the context clearly dictates otherwise.

The terms "*comprising*", "*comprises*" and "*comprised* of" as used herein are synonymous with "*including*", "*includes*", "*containing*" or "*contains*", and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The words "*preferred*" and "*preferably*" are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

The molecular weights given in the present text refer to number average molecular weights (Mn), unless otherwise stipulated. All molecular weight data refer to values obtained by gel permeation chromatography (GPC) according to DIN 55672-1:2016-03 with tetrahydrofuran (THF) as eluent, unless otherwise stipulated.

The zero-shear viscosity mentioned in this application means the limiting value of the viscosity function at infinitely low shear rates. It is determined herein using an Anton Paar Rheometer MCR 100 (US 200 Evaluation Software) in plate-plate geometry. The samples are measured in oscillatory shearing under: low shear amplitudes of 10%; a temperature of 23°C; angular frequency ramp log 100-0.1 1/s; a measuring gap of 0.5 mm; evaluation according to Carreau-Gahleitner I; and, a punch diameter of 25 mm.

As used herein, room temperature is 23°C plus or minus 2°C.

As used herein, the term "*equivalent (eq*.*")* relates, as is usual in chemical notation, to the relative number of reactive groups present in the reaction; the term "*milliequivalent*" (*meq*) is one thousandth (10⁻³) of a chemical equivalent.

Two-component compositions in the context of the present invention are understood to be compositions in which the component comprising said compound (VCC) and the multifunctional hardener component must be stored in separate vessels because of their (high) reactivity. The two components are mixed only shortly before application and then react, typically without additional activation, with bond formation and thereby formation of a polymeric network. However, catalysts may also be employed or higher temperatures applied in order to accelerate the cross-linking reaction.

As used herein, "*aliphatic group*" means a saturated or unsaturated linear (i.e., straight-chain), branched, cyclic (including bicyclic) organic group: the term "*aliphatic group*" thus encompasses "*alicyclic group*", the latter being a cyclic hydrocarbon group having properties resembling those of an aliphatic group. The term "*aromatic group*" means a mono- or polynuclear aromatic hydrocarbon group.

The aforementioned citations mentioned as background art attest to the fact that the term "*exo-vinylene cyclic carbonate*" is a well-known term of art. However, for completeness, it is noted that such "exo-*vinylene cyclic carbonates*" may also be referred to as alkylidene cyclic carbonates and, in particular, α-alkylidene cyclic carbonates. The terms "*exo*", "*vinylidene*" and "*alkylidene group*" are being used in accordance with their standard definitions in the art as found in: http://goldbook.iupac.org/E02094.html; http://goldbook.iupac.org/V06623.html; and, http://goldbook.iupac.org/A00232.html respectively.

As used herein, "*alkyl group*" refers to a monovalent group that is a radical of an alkane and includes straight-chain and branched organic groups, which groups may be substituted or unsubstituted. The term "*alkylene group*" refers to a divalent group that is a radical of an alkane and includes linear and branched organic groups, which groups may be substituted or substituted.

As used herein, in particular with respect to the multifunctional hardener: a) a primary amine group is an atomic grouping of the type "-NH₂" (R-H); (b) a secondary amine group is an atomic grouping of the type "-NHR"; and, c) an amino group is understood to mean an atomic grouping of the type "-NH₂".

The term "*essentially free*" is intended to mean herein that the applicable group, compound, mixture or component constitutes less than 0.1 wt.%, based on the weight of the two-component composition. In particular, the two-component composition of the present invention is preferably essentially free of NCO groups.

### DETAILED DESCRIPTION OF THE INVENTION

As described herein before, the present invention provides a two-component sealant and/or adhesive composition comprising:
i) in a first component, at least one compound (VCC) having two or more exo-vinylene cyclic carbonate units, wherein said exo-vinylene cyclic carbonate units are bonded to one another by means of at least one organic, siloxane-free linking group, wherein said linking group is not directly bonded to the exo-vinylene double bonds and linking groups formed by polymerization of (meth)acrylic monomers are excluded; and,
ii) in a second component, at least one multifunctional hardener that has at least two functional groups selected from the group consisting of primary amino groups, secondary amino groups, hydroxy groups, phosphine groups, phosphonate groups, and mercaptan groups,
wherein the compound (VCC) of said first component is characterized in that it has at least one acetal group in the linking group.

### First Component

The exo-vinylene cyclic carbonate units of the compound (VCC) are preferably 5-alkylidene-1,3-dioxolan-2-one units of the general formula (I): 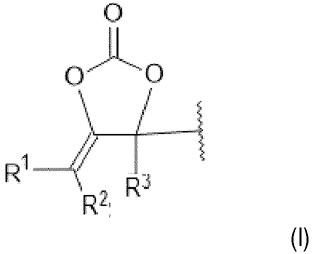 wherein the at least one organic, siloxane-free linking group is located between the 4-positions of the 5-alkylidene-1,3-dioxolan-2-one units and wherein R¹ to R³ independently of one another denote hydrogen or an organic group.

R¹ and R² independently of one another preferably stand for a C1 to C10 alkyl group, a C1 to C6 alkyl group, a C1 to C3 alkyl group, a methyl group, or particularly preferably for an H atom. R³ preferably stands for a C1 to C10 alkyl group, a C1 to C6 alkyl group, a C1 to C3 alkyl group, or for an H atom, particularly preferably for a methyl group. R¹, R², and R³ particularly preferably stand for hydrogen or R¹ and R² stand for hydrogen and R³ stands for a methyl group.

Suitable compounds (VCC) of the invention are, for example, those of the formula (II) 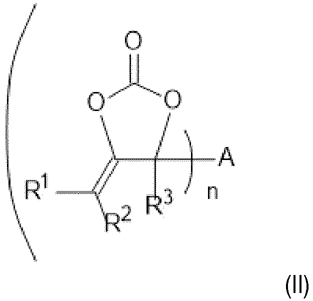 wherein:
R¹ to R³ have the same meaning as in formula (I) above;
n is a number greater than or equal to 2, preferably from 2 to 10 or from 3 to 10; and,
A denotes a siloxane-free, organic linking group, with the exception of a linking group formed by the polymerization of (meth)acrylic monomers.

Preferably, -A in Formula (II) has the meaning -B-Q, wherein:
B denotes a spacer group, for example, a divalent hydrocarbon group, in particular an alkylene group preferably having 1 to 6 carbon atoms, e.g., butylene, propylene, ethylene, or particularly preferably methylene; and,
Q is an organic group that contains at least one functional group selected from ether groups, polyether groups, ester groups, polyester groups, amide groups, polyamide groups, urethane groups, polyurethane groups, urea groups, polyurea groups, acetal groups, and polyacetal groups, where ether groups, polyether groups, acetal groups, and polyacetal groups are particularly preferred.

Suitable, for example, are compounds of the formula (III) 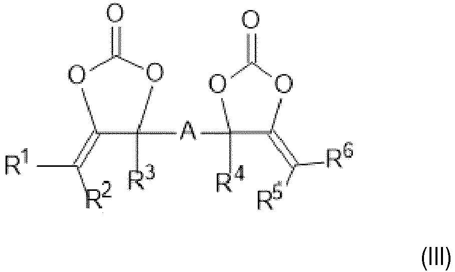 wherein: R¹ to R⁶ independently of one another each denote hydrogen or an organic group.

In said Formula (III) R¹ to R³ preferably have the same meaning as in formula (I). R⁵ and R⁶ preferably have the same meaning as R¹ and R², and R⁴ preferably has the same meaning as R³.

Further, in said Formula (III) A is a siloxane-free, organic linking group comprising at least one acetal group, with the exception of a linking group formed by the polymerization of (meth)acrylic monomers. Preferably, -A- has the meaning -B-Q-B-, wherein:
B denotes a spacer group, for example, a divalent hydrocarbon group, in particular an alkylene group preferably having 1 to 6 carbon atoms, e.g., butylene, propylene, ethylene, or particularly preferably methylene; and,
Q is an organic group, which contains at least one functional group selected from ether groups, polyether groups, ester groups, polyester groups, amide groups, polyamide groups, urethane groups, polyurethane groups, urea groups, polyurea groups, acetal groups, and polyacetal groups, where ether groups, polyether groups, acetal groups, and polyacetal groups are particularly preferred.

Also suitable, for example, are compounds of the formula (IV) 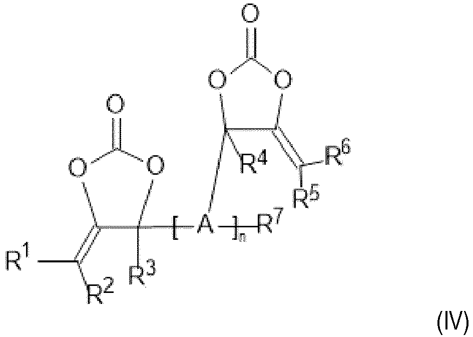 or compounds of the formula (IVa) 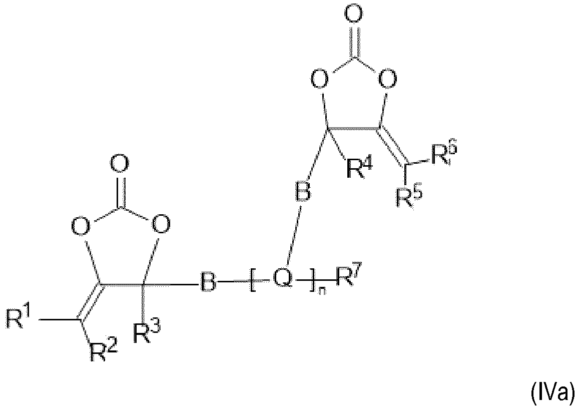 wherein:
R¹ to R⁶, A, B, and Q have the same meaning as in Formula (III);
R⁷ denotes hydrogen, an OH group, or an organic group, e.g., an alkyl, alkoxy, or hydroxyalkyl group having, for example, 1 to 10 carbon atoms; and,
n denotes a number greater than or equal to 1, preferably from 1 to 10 or from 2 to 10.

Also suitable, for example, are compounds of the formula (V) 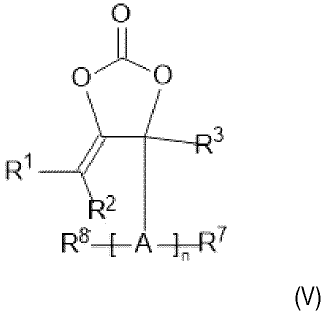 or compounds of the formula (Va) 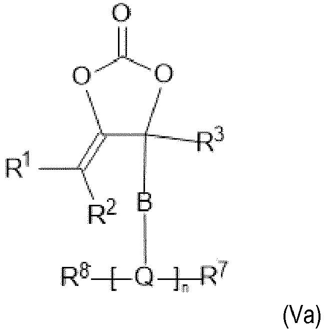 wherein:
R¹ to R³, A, B, and Q have the same meaning as in formula (III);
R⁷ and R⁸ independently of one another denote hydrogen, an OH group, or an organic group, e.g., an alkyl, alkoxy, or hydroxyalkyl group having, for example, 1 to 10 carbon atoms, and where R⁷ and / or R⁸ can contain an exo-vinylene group; and,
n denotes a number greater than or equal to 1, if at least one of the R⁷ and R⁸ groups contains at least one exo-vinylene group, and n denotes a number greater than or equal to 2, preferably from 2 to 10 or from 3 to 10, if neither of the R⁷ and R⁸ groups contains an exo-vinylene group.

In the compounds of the formulas (II) to (V), (IVa), and (Va), R¹, R², R⁵, and R⁶ independently of one another preferably stand for a C1 to C10 alkyl group, a C1 to C6 alkyl group, a C1 to C3 alkyl group, or particularly preferably for an H atom. R³ and R⁴ independently of one another preferably stand for a C1 to C10 alkyl group, a C1 to C6 alkyl group, a C1 to C3 alkyl group, or for an H atom, particularly preferably for a methyl group.

In the compounds of the formulas (II) to (V), (IVa), and (Va), R¹, R², R⁵, and R⁶ particularly preferably independently of one another each stand for an H atom; R³ and R⁴ independently of one another for methyl or for an H atom; and R⁷, R⁸ and A independently of one another for groups of polyhydric alcohols having 2 to 12 carbon atoms, which may also be interrupted by -O-, -S-, or -NR₂- groups, where R stands for H or C1 to C12 alkyl.

The linking group A in the compounds of the formulas (II) to (V) and the group Q in the compounds (II), (III), (IVa), and (Va) have at least one acetal group. "A" preferably stands for an organic group having a total of at most 24 carbon atoms, in particular at most 18 carbon atoms, and particularly preferably at most 14 carbon atoms. R¹ can contain, apart from oxygen, further heteroatoms such as nitrogen or sulfur.

Preferably, -A- in compounds of the formula (III) stands for a structural element of the formula 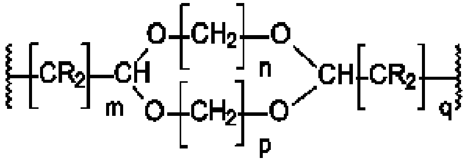 Wherein:
R stands for a hydrocarbon group, e.g., a C1 to C10 alkyl group or preferably for hydrogen; and,
m, n, p, and q stand for numbers from 1 to 10, where m and q are preferably 1 and n and p preferably denote numbers from 4 to 10.

Preferred compounds are those of the formula (Vb) 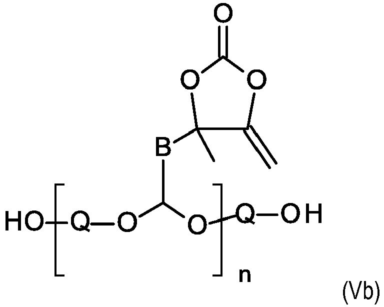 wherein:
B denotes an alkylene group preferably having 1 to 6 carbon atoms, e.g., butylene, propylene, ethylene, or particularly preferably methylene;
Q denotes a group derived from a polyol, a polyol being an alcohol with at least two hydroxy groups; and,
n is a number greater than or equal to 2, preferably from 2 to 10 or from 3 to 10.

Suitable as polyol-derived groups (Q) are, in particular, the groups derived from the alcoholic hardeners, specified hereinbelow, that is from polyols preferably selected from ethylene glycol, 1,3-propanediol, 1,4-butanediol, diethylene glycol, triethylene glycol, neopentyl glycol, 1,5-pentanediol, 1,6-hexanediol, 1,8-octanediol, 3-methyl-1,5-pentanediol, 1,4-bis(hydroxymethyl)cyclohexane, 1,6-bis(hydroxymethyl)cyclohexane, glycerol, diglycerol, polyethylene glycol, polypropylene glycol, PolyTHF, pentaerythritol, dipentaerythritol, and, sugar alcohols such as sorbitol and mannitol.

Preferred compounds are also those of the formula (Vc): 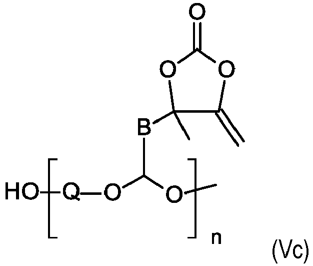 wherein B, Q, and n have the same meaning as in formula (Vb).

Preferred compounds are also those of the formula (IVb): 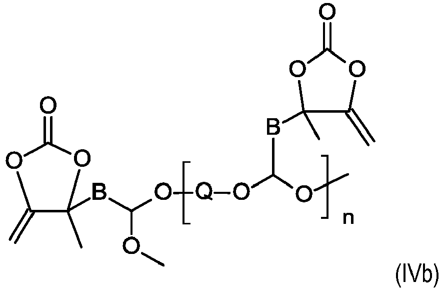 wherein:
B and Q have the same meaning as in formula (Vb); and,
n is a number greater than or equal to 1, preferably from 1 to 10 or from 2 to 10.

Preferred compounds are also those of the formula (VI): 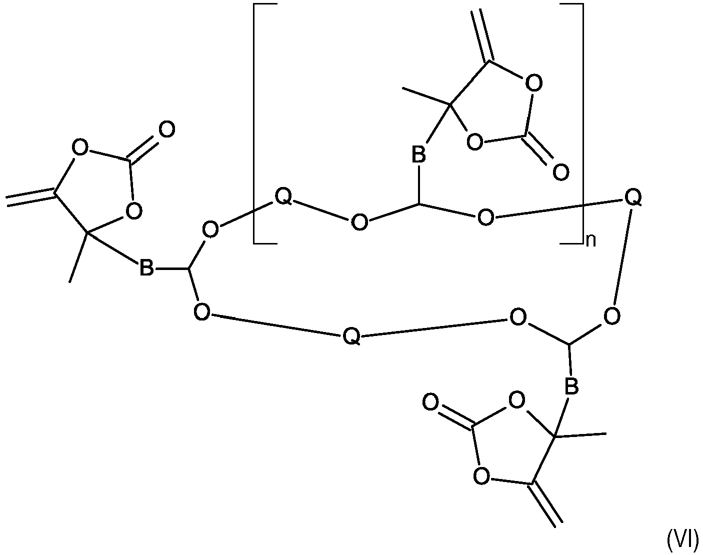 wherein:
B and Q have the same meaning as in formula (Vb); and,
n is a number greater than or equal to 0, preferably from 0 to 10 or from 1 to 5.

The following preferred compounds are cited as examples of the compounds for use in the first component of the composition of the present invention:
a) Compound of the formula (Via): 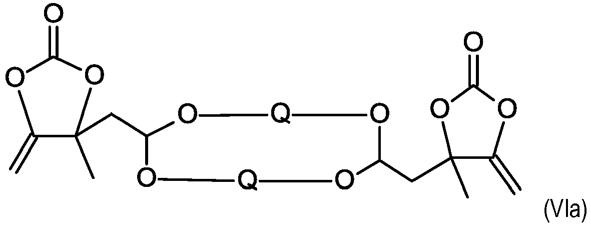
b) Compound of the formula (IVc): 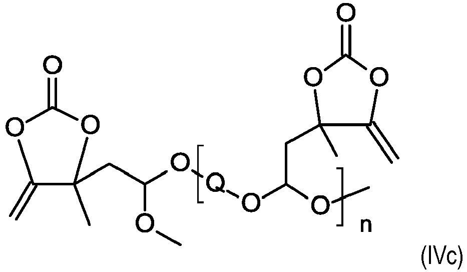 with n = 1, 2, or 3.
c) Compound of the formula (Vd): 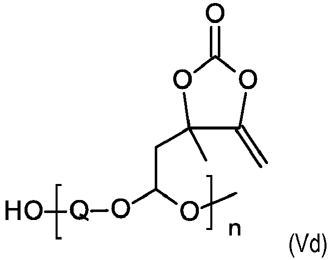 with n being greater than or equal to 2, preferably 2 or 3.
d) compound of the formula (Ve): 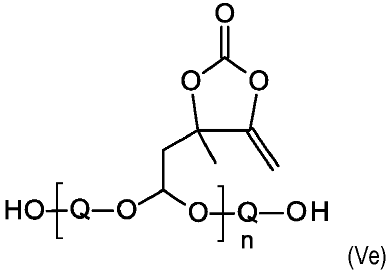 with n being greater than or equal to 2, preferably 2 or 3.

Here, -O-Q-O- in formulas VIa, IVc, Vd, and Ve in each case stands for the group of a dihydric alcohol, preferably selected from ethylene glycol, 1,3-propanediol, 1,4-butanediol, diethylene glycol, triethylene glycol, neopentyl glycol, 1,5-pentanediol, 1,6-hexanediol, 1,8-octanediol, 3-methyl-1,5-pentanediol, 1,4-bis(hydroxymethyl)cyclohexane, 1,6-bis(hydroxymethyl)cyclohexane, glycerol, diglycerol, polyethylene glycol, polypropylene glycol, PolyTHF, pentaerythritol, dipentaerythritol and sugar alcohols such as sorbitol and mannitol.

### Preparation

The above described compounds (VCC) for use in the first component of the composition of the present invention can be prepared, for example, by transacetalization of an exo-vinylene cyclic carbonate of the formula (VII): 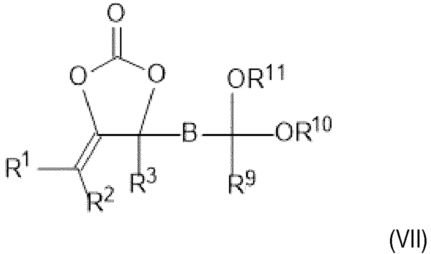 Wherein:
R¹ to R³ and R⁹ independently of one another denote hydrogen or an organic group;
R¹⁰ and R¹¹ independently of one another denote an organic group; and,
B denotes an organic linking group (spacer).

R¹ to R³ preferably have the same meaning as in formula (I). R⁹ preferably stands for a C1 to C10 alkyl group, a C1 to C6 alkyl group, a C1 to C3 alkyl group, a methyl group, or particularly preferably for an H atom. R¹⁰ and R¹¹ preferably stand for a C1 to C10 alkyl group, a C1 to C6 alkyl group, or a C1 to C3 alkyl group, particularly preferably for a methyl group. B preferably stands for an alkylene group having 1 to 4 carbon atoms.

In an important embodiment, R¹ and R² in compounds of the formula (VII) each stand for a H atom; R³ and R⁹ independently of one another for methyl or for a H atom; R¹⁰ and R¹¹ independently of one another for hydrocarbon groups, in particular for C1 to C10 alkyl groups or alkyl groups having 1 to 4 carbon atoms, particularly preferably for methyl groups; and, B stands for an alkylene group having 1 to 4 carbon atoms, in particular for methylene.

A compound of the formula (VIIa) below is particularly preferred as the reagent to be subjected to transacetalization:

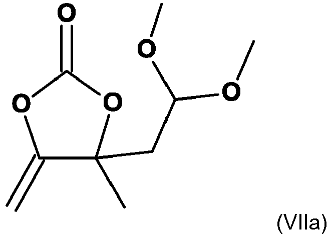

Without intention to limit the present invention, the exo-vinylene cyclic carbonates suitable for a transacetalization can be prepared by a method in which:
i) in a first step, a compound with a terminal triple bond is reacted with an alkanone or alkanal, which contains an acetal group, the triple bond being added to the carbonyl group of the alkanone or alkanal with the formation of a hydroxy compound; and,
ii) in a second step, the ring closure to form the carbonate group takes place with carbon dioxide.

### Step i)

This reaction step is an addition, known *per se*, of triple bonds to a carbonyl group. Suitable compounds with a terminal triple bond are in particular compounds of the formula (VIII):

Y-CH≡CH (VIII)

where Y stands for an H atom, a hydrocarbon group having from 1 to 10 carbon atoms, e.g., an alkyl or aryl group, or a protective group having a maximum of 10 carbon atoms. Provided Y is not a protective group, the substituents of the Y-substituted C atom determine the subsequent groups R¹, R², R⁵, and R⁶ in formulas (I) to (V). Proceeding from Formula (VIII), therefore, one of the R¹ or R² groups or one of the R⁵ or R⁶ groups in Formulas (I) to (V) is an H atom and the other respective group is Y. The preferred meanings of Y therefore correspond to the above preferred meanings of R¹, R², R⁵, and R⁶.

It is noted that Y can also stand for a protective group, however. Protective groups are cleaved off again during or after the synthesis, so that in this case the subsequent R¹ and R² or R⁵ and R⁶ groups in formulas (I) to (V) and (VII) each stand for an H atom. A suitable protective group is, e.g., the trimethylsilyl group (abbreviated as TMS).

The employed alkanones or alkanals contain an acetal group. Preferred alkanones or alkanals with an acetal group are those of the formula IX: 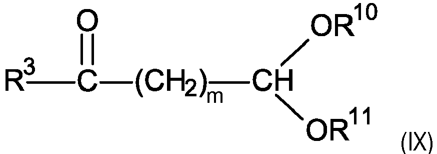 wherein:
R³ stands for an H atom or a C1 to C10 alkyl group; and,
m stands for 0 or an integer from 1 to 10, preferably an integer from 1 to 6 and more preferably m stands for 1.

The group 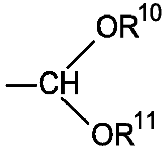 stands for the acetal group, where R¹⁰ and R¹¹ stand for hydrocarbon groups, in particular for C₁ to C₁₀ alkyl groups or alkyl groups having 1 to 4 carbon atoms, particularly preferably for methyl groups. R³ corresponds to R³ or R⁴ in formulas I to V and VII and has the corresponding meanings and preferred meanings; R³ is a methyl group in a preferred embodiment.

Various methods are known for carrying out the addition reaction of this first synthesis step. The starting compounds are preferably reacted in the presence of a strong base such as a metal alcoholate: this is preferably a metal salt of an aliphatic alcohol, in particular a metal salt of a C1 to C8, or C2 to C6 alcohol, such as ethanol, n-propanol, isopropanol, n-butanol or tertiary butanol; the metal cation of the metal alcoholate is preferably an alkali metal cation with Na⁺ and K⁺ being preferred. Mentioned as preferred metal alcoholates are potassium-tert-butylate, sodium-tert-butylate, potassium isopropylate, and sodium isopropylate.

The addition reaction is preferably carried out in the presence of a solvent. Inert solvents are preferred as solvents; these contain no reactive groups that react with the starting compounds. Inert, polar, aprotic solvents are particularly preferred. Named as such are, e.g., cyclic ether compounds, in particular tetrahydrofuran (THF).

The addition reaction is generally exothermic and therefore cooling preferably takes place during the reaction. The temperature of the reaction mixture is preferably a maximum of 50°C, in particular a maximum of 25°C; it is preferably between 0°C and 25°C.

Water, optionally acid, and optionally a non-polar organic solvent can be added to work up the obtained product mixture. In that circumstance where the product of value from the 1^{st} step already forms an independent organic phase, the organic solvent can be omitted. Two phases form of which the organic phase contains the product of the 1^{st} step (addition product). The organic phase can be dried to remove water. Solvent can be easily removed by distillation. The product can be obtained in pure form by vacuum distillation. Alternatively, the workup can also occur using the conventional methods of crystallization or extraction, particularly if the product from the 1^{st} step has a very high boiling point.

### Step ii)

Having regard to said second step of the disclosed method - the ring closure with carbon dioxide - the product thereof is a compound with a cyclic carbonate group and an acetal group. In an autoclave or other suitable reaction vessel, carbon dioxide, optionally in admixture with an inert gas, is brought into contact with the starting compound (*step i) product*) preferably as a gas or in the supercritical state under pressure. The reaction is preferably catalyzed using either a base as a catalyst or a catalyst system comprising both a base and a metal salt.

Compounds with at least one tertiary amino group, e.g., with one to three tertiary amino groups, are preferred as bases in this context. Bases of this kind are known *per* se and usually have a molar mass less than 500 g/mol, in particular less than 300 g/mol. These are in particular aliphatic or cycloaliphatic compounds and, as examples thereof might be mentioned: TMTACN (N,N',N"-trimethyl-1,4,7-triazacyclononane); PMDETA (pentamethyldiethylenetriamine); TMEDA (tetramethylethylenediamine); DBU (1,8-diazabicyclo[5.4.0]undec-7-ene); and, DBN (1,5-diazabicyclo[4.3.0]non-5-ene).

The aforementioned metal salt of the catalyst system is preferably a salt with monovalent to trivalent cations, in particular cations of Cu, Ag, or Au. The anion of the metal salts is preferably a carboxylate, in particular a C1 to C6 carboxylate. Silver acetate or copper acetate are mentioned as preferred metal salts.

In an alternative catalyst system for said second step, phosphanes - in particular trialkyl- or triarylphosphanes - may be used either alone or in combination with a metal salt.

The step ii) reaction is preferably carried out at a pressure of from 1 to 100 bar, in particular 5 to 70 bar. The temperature of the reaction mixture is typically from 10°C to 100°C and preferably from 10°C to 80°C. As is known in the art, the progress of the reaction can be monitored by an appropriate method, such as by gas chromatography.

The obtained product of step ii) can be worked up after cooling and pressure release. An organic solvent - preferably an inert, hydrophobic organic solvent, such as dichloromethane or toluene - and an aqueous acid, such as aqueous HCl, can be added to the product so that two phases form. The desired product partitions into the organic phase from which water can be removed by drying. The product can be purified and solvents removed by distillation, preferably in a thin-film evaporator equipped with a wiper system. Alternatively, a workup and purification by crystallization or extraction may be used if the product from step ii) has a high boiling point.

### Transacetalization:

The transacetalization, e.g., of the reaction products from step ii) can be carried out with alcohols under catalysis using Lewis acids or protonic acids, the latter affording better yields. The acid catalysts may be homogeneous, heterogeneous or supported and may be acid inorganic, organometallic or organic catalysts or mixtures thereof. It is noted that stronger acids tend to discolor the reaction products, and weaker acids require higher reaction temperatures.

As suitable inorganic acid catalysts may be mentioned: sulfuric acid; sulfates and hydrogen sulfates, such as sodium hydrogen sulfate; phosphoric acid; phosphonic acid; hypophosphorous acid; aluminum sulfate hydrate; alum; acidic silica gel (pH ≤ 6, in particular ≤ 5); and, acidic aluminum oxide. Furthermore, aluminum compounds of the general formula Al(OR¹)₃ and titanates of the general formula Ti(OR¹)₄ can be used as acid inorganic catalysts, where the R¹ groups can each be identical or different and be selected independently of one another from C₁-C₂₀ alkyl groups, for example, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, isoheptyl, n-octyl, 2-ethylhexyl, n-nonyl, n-decyl, n-dodecyl, n-hexadecyl, or n-octadecyl; C₃-C₁₂ cycloalkyl groups, for example, cyclopropyl, cyclobutyl, cyclopentyl, cyclohexyl, cycloheptyl, cyclooctyl, cyclononyl, cyclodecyl, cycloundecyl, and cyclododecyl; cyclopentyl, cyclohexane, and cycloheptyl are preferred.

Preferred organometallic acid catalysts are selected from dialkyltin oxides R¹₂SnO or dialkyltin esters R¹₂Sn(OR²)₂ wherein: R¹ is defined as above and can be identical or different; and, R² can have the same meanings as R¹ and can in addition be a C₆-C₁₂ aryl, for example, phenyl, o-, m- or p-tolyl, xylyl, or naphthyl. R² can be identical or different in each case. Specific examples of organotin catalysts are tin(II) n-octanoate, tin(II) 2-ethylhexanoate, tin(II) laurate, dibutyltin oxide, diphenyltin oxide, dibutyltin dichloride, dibutyltin diacetate, dibutyltin dilaurate, dibutyltin dimaleate, or dioctyltin diacetate. Particularly preferred representatives of acid organometallic catalysts are dibutyltin oxide, diphenyltin oxide, and dibutyltin dilaurate.

Preferred organic acid catalysts are organic compounds possessing phosphate groups, sulfonic acid groups, sulfate groups or phosphonic acid groups. Furthermore, acidic ion exchangers can also be used as organic acid catalysts, examples of which are sulfonic acid group-containing polystyrene resins which are crosslinked with about 2 mole % of divinylbenzene. Particularly preferred are sulfonic acids such as, for example, p-toluenesulfonic acid or methanesulfonic acid, as well as trifluoroacetic acid.

The alcohols used in the transacetalization reaction can be primary, secondary or tertiary, with primary alcohols being preferred. Diols are particularly preferred because they lead to linear oligomers and the molecular weight of the most suitable diols is from 62 to 5000 g/mol, preferably from 90 to 2000 g/mol. Where polyols with three or more hydroxy groups are used, monools can be used in combination therewith for regulating the molecular weight and branching of the products. Mixtures of alcohols are likewise possible.

The ratio of OR groups of the acetal groups to the OH groups in the transacetalization reaction is typically from 4:1 to 1:4, preferably from 2:1 to 1:2, and more preferably from 1.5:1 to 1:1.5.

The transacetalization reaction can be carried out in various solvents; polar solvents, such as acetonitrile, are preferred. Reaction temperatures lie between room temperature and 100°C, but are preferably < 80°C and particularly preferably < 60°C. The reaction is carried out especially preferably under vacuum for the effective removal of methanol from the equilibrium. It is moreover particularly preferable to this end, if the reaction is carried out without solvent for long stretches. Therefore, for better homogenization the reaction mixture can first be used in solution and the solvent can then be removed under vacuum and, optionally, recovered and reused.

The workup of the reaction products of the transacetalization reaction invention (oligomeric exo-vinylene cyclic carbonate acetals) can occur by simple washing out of the catalyst. If said catalyst is supported, it only needs to be filtered. Higher purities result from shaking out with water, buffers or very weak bases and subsequently drying with drying agents. Precipitations in water and non-solvents are also possible, care being taken that the acetal groups are not hydrolyzed.

The exo-vinylene cyclic carbonates of the present invention typically have weight average molecular weights (Mw) between 500 and 50,000 g/mol, particularly preferably between 1000 and 10,000 g/mol, as measured by gel permeation chromatography (GPC) in tetrahydrofuran using a polystyrene standard. The viscosity of the exo-vinylene cyclic carbonates is typically from 0.5 to 5000 Pa·s (measured as zero-shear viscosity).

It is envisaged that the exo-vinylene cyclic carbonates useful in the first component of the present invention can be chain-extended with isocyanates, acid chlorides and / or acid anhydrides without destruction of the exo-vinylene carbonate ring.

### Second Component

As mentioned hereinbefore the second component of the composition of the present invention comprises at least one multifunctional hardener that has at least two functional groups (F) selected from the group consisting of: primary amino groups; secondary amino groups; hydroxy groups; phosphine groups; phosphonate groups; and, mercaptan groups. No particular limitation is imposed on the number of functional groups (F) possessed by the hardener: compounds having 2, 3, 4, 5, 6, 7, 8, 9 or 10 functional groups may be used, for instance. Moreover, the multifunctional hardener can be a low-molecular-weight substance - that is its molecular weight is less than 500 g/mol - or an oligomeric or polymeric substance that has a number average molecular weight (Mn) above 500 g/mol. And, of course, mixtures of hardeners - for instance mixtures of alcoholic and amine hardeners - may be used in the second component.

The total amount of hardener present in the second component is preferably selected so that the molar ratio of functional alkylidene-1,3-dioxolan-2-one groups of said first component to the functional groups (F) in the hardener is in the range of from 1:10 to 10:1, for example from 5:1 to 1:5, and is preferably in the range of from 1:2 to 2:1.

In an alternative expression of the two-component composition, the total amount of hardeners in the second component thereof is suitably from 0.1 to 50 wt.%, preferably from 0.5 to 40 wt.% and more preferably 1 to 30 wt.%, based on the combined total amount of exo-vinylene cyclic carbonate compounds and the employed hardeners.

In an important embodiment, the functional groups (F) of the hardener are selected from the group consisting of: aliphatic hydroxyl groups; aliphatic primary amino groups; aliphatic secondary amino groups; aliphatic phosphine groups; aliphatic phosphonate groups; aliphatic mercaptan groups; and, mixtures thereof.

In a preferred embodiment, the hardener of the second component comprises or consists of an amine (or aminic) or an alcoholic hardener and, more particularly, the functional groups (F) of the hardener are selected from the group consisting of: aliphatic hydroxyl groups; aliphatic primary amino groups; aliphatic secondary amino groups; and, combinations thereof.

### i) Aminic Hardeners

Aminic hardeners, also called amine or polyamine hardeners below, include, without intention to limit: aliphatic polyamines; cycloaliphatic polyamines; aromatic polyamine; araliphatic polyamines; and, polymeric amines such as aminoplasts and polyamidoamines. Amine hardeners crosslink polymers with 1,3-dioxolan-2-one groups, also called carbonate polymers below, by reacting the primary or secondary amino functions of the polyamines with the 1,3-dioxolan-2-one groups of the carbonate polymers with the formation of urethane functions.

Preferred polyamine hardeners have on average at least two primary or secondary amino groups per molecule, for example two, three or four primary or secondary amino groups per molecule. They can also contain in addition one or more tertiary amino groups.

Without intention to limit the present invention, suitable polyamines which may be used individually or in combination, include:
a) aliphatic polyamines, such as ethylenediamine, 1,2- and 1,3-propanediamine, neopentanediamine, hexamethylenediamine, octamethylenediamine, 1,10-diaminodecane, 1,12-diaminododecane, diethylenetriamine, triethylenetetramine, tetraethylenepentamine, 2,2-dimethylpropylenediamine, trimethylhexamethylenediamine, 1-(3-aminopropyl)-3-aminopropane, 1,3-bis(3-aminopropyl)propane, and 4-ethyl-4-methylamino-1-octylamine;
b) cycloaliphatic diamines such as 1,2-diaminocyclohexane, 1,2-, 1,3- and 1,4-bis(aminomethyl)cyclohexane, 1-methyl-2,4-diaminocyclohexane, N-cyclohexylpropylene-1,3-diamine, 4-(2-aminopropan-2-yl)-1-methylcyclohexan-1-amine, isophorone diamine, 4,4'-diaminodicyclohexylmethane (Dicykan), 3,3'-dimethyl-4,4'-diaminodicyclohexylmethane, 3,3',5,5'-tetramethyl-4,4'-diaminodicyclohexylmethane, 4,8-diaminotricyclo[5.2.1.0]decane, norbornane diamine, menthanediamine and menthenediamine;
c) aromatic diamines such as toluylenediamine, xylylenediamine, in particular metaxylylenediamine (MXDA), bis(4-aminophenyl)methane (MDA or methylenedianiline), and bis(4-aminophenyl)sulfone (also known as DADS, DDS, or Dapsone);
d) cyclic polyamines such as piperazine and N-aminoethylpiperazine;
e) polyetheramines, in particular difunctional and trifunctional primary polyetheramines based on polypropylene glycol, polyethylene glycol, polybutylene oxide, poly(1,4-butanediol), polytetrahydrofuran (PolyTHF) or polypentylene oxide;
f) polyamidoamines (amidopolyamines) which can be obtained by reacting dimeric fatty acids (e.g., dimeric linoleic acid) with low-molecular-weight polyamines such as diethylenetriamine, 1-(3-aminopropyl)-3-aminopropane or triethylenetetramine, or with other diamines, such as the aforementioned aliphatic or cycloaliphatic diamines;
g) adducts obtainable by reacting amines, in particular diamines, with a deficit of epoxy resin or reactive diluent, preferably such adducts being used where about 5 to 20% of the epoxy groups have been reacted with amines, in particular diamines;
h) phenalkamines, as are known from epoxide chemistry; and,
i) Mannich bases which may typically be prepared by condensation of polyamines, preferably diethylenetriamine, triethylenetetramine, isophorone diamine, 2,2,4- or 2,4,4-trimethylhexamethylenediamine, 1,3- and 1,4-bis(aminomethyl)cyclohexane with aldehydes, preferably formaldehyde and mono- or polyhydric phenols having at least one aldehyde-reactive core site, e.g., the various cresols and xylenols, p-tert-butylphenol, resorcinol, 4,4'-dihydroxydiphenylmethane, 4,4'-dihydroxydiphenyl-2,2-propane, but preferably phenol.

As an exemplary mixture of polyamine hardeners may be mentioned a mixture comprising: a polyetheramine; and, a difunctional amine selected from the group consisting of aliphatic, cycloaliphatic, and aromatic diamines.

A plurality of suitable polyetheramine hardeners - which may be used individually or in combination with each other or with the aforementioned aliphatic, cycloaliphatic, and aromatic amines - are known in the art and / or commercially. These include: 4,7,10-trioxatridecane-1,3-diamine; 4,7,10-trioxatridecane-1,13-diamine; 1,8-diamino-3,6-dioxaoctane (XTJ-504, available from Huntsman); 1,10-diamino-4,7-dioxadecane (XTJ-590, available from Huntsman); 1,12-diamino-4,9-dioxadodecane (available from BASF SE); 1,3-diamino-4,7,10-trioxatridecane (available from BASF SE); primary polyetheramines based on polypropylene glycol with an average molar mass of 230 and including Polyetheramines D 230 (available from BASF SE) and Jeffamine® D 230 (available from Huntsman); difunctional, primary polyetheramines based on polypropylene glycol with an average molar mass of 400, such as Polyetheramines D 400 (available from BASF SE) and Jeffamine® XTJ 582 (available from Huntsman); difunctional, primary polyetheramines based on polypropylene glycol with an average molar mass of 2000, such as Polyetheramines D 2000 (available from BASF SE), Jeffamine® D2000 and or Jeffamine® XTJ 578 (each available from Huntsman); difunctional, primary polyetheramines based on propylene oxide with an average molar mass of 4000 such as Polyetheramine D 4000 (available from BASF SE); trifunctional, primary polyetheramines prepared by reacting propylene oxide with trimethylolpropane, followed by amination of the terminal OH groups with an average molar mass of 403, such as Polyetheramines T 403 (available from BASF SE) and Jeffamine® T 403 (available from Huntsman); trifunctional, primary polyetheramine, prepared by reacting propylene oxide with glycerol, followed by amination of the terminal OH groups with an average molar mass of 5000, Polyetheramines T 5000 (available from BASF SE) and Jeffamine® T 5000 (available from Huntsman); aliphatic polyetheramines which are made up of a polyethylene glycol, grafted with propylene oxide, and have an average molar mass of 600, such as Jeffamine® ED-600 or Jeffamine® XTJ-501 (each available from Huntsman); aliphatic polyetheramines which are made up of a polyethylene glycol, grafted with propylene oxide, and have an average molar mass of 900, such as Jeffamine® ED-900 (available from Huntsman); aliphatic polyetheramines which are made up of a polyethylene glycol, grafted with propylene oxide, and have an average molar mass of 2000, such as Jeffamine® ED-2003 (available from Huntsman); difunctional, primary polyetheramine prepared by amination of a diethylene glycol, grafted with propylene oxide, and having an average molar mass of 220, such as Jeffamine® HK-511 (available from Huntsman); aliphatic polyetheramines based on a copolymer of poly(tetramethylene ether glycol) and polypropylene glycol, with an average molar mass of 1000, such as Jeffamine® XTJ-542 (available from Huntsman); aliphatic polyetheramines, based on a copolymer of poly(tetramethylene ether glycol) and polypropylene glycol, with an average molar mass of 1900 such as Jeffamine® XTJ-548 (available from Huntsman); aliphatic polyetheramines based on a copolymer of poly(tetramethylene ether glycol) and polypropylene glycol, with an average molar mass of 1400, such as Jeffamine® XTJ-559 (available from Huntsman); polyether triamines based on an at least trihydric alcohol grafted with butylene oxide, with an average molar mass of 400 such as Jeffamine® XTJ-566 (available from Huntsman); aliphatic polyetheramines prepared by amination of alcohols, grafted with butylene oxide, with an average molar mass of 219 such as Jeffamine® XTJ-568 (available from Huntsman); polyetheramines based on pentaerythritol and propylene oxide, with an average molar mass of 600, such as Jeffamine® XTJ-616 (available from Huntsman); polyetheramines based on triethylene glycol, with an average molar mass of 148, such as Jeffamine® EDR-148 (available from Huntsman); difunctional, primary polyetheramines, prepared by amination of an ethylene glycol, grafted with propylene oxide, with an average molar mass of 176, such as Jeffamine® EDR-176 (available from Huntsman); and, polyetheramines prepared by amination of polytetrahydrofuran (PolyTHF), with an average molar mass of 250, such as PolyTHF-Amine 350 (available from BASF SE).

Good results have been obtained in using, as amine hardeners, one or more of: aliphatic polyamines, in particular 2,2-dimethylpropylenediamine; aromatic diamines, in particular m-xylylenediamine (MXDA); cycloaliphatic diamines, in particular isophorone diamine (IPDA), N-cyclohexylpropylene-1,3-diamine and 4,4'-diaminodicyclohexylmethane (Dicykan); and, difunctional or trifunctional primary polyetheramines, based on polypropylene glycol, such as Jeffamine® D 230 or Jeffamine® T 403. Also particularly preferred for use in the present invention are polyamines in which a high mobility and low steric hindrance around the amino groups predominate, for instance 4,9-dioxadodecane-1,12-diamine, 4,7,10-trioxatridecane-1,13-diamine and PolyTHF Amine 350 (available from BASF SE).

### ii) Alcoholic Hardeners

Alcoholic hardeners crosslink to form carbonate polymers by reaction of the primary or secondary alcohol functions with the 1,3-dioxolan-2-one groups with the formation of carbonic acid diesters. As such, preferred alcoholic hardeners for use in the present invention have on average at least two primary or secondary hydroxy groups per molecule; alcoholic hardeners having two, three or four primary or secondary hydroxy groups per molecule might be mentioned in this regard.

Broadly, the alcoholic hardeners may primarily be selected from low-molecular-weight and higher-molecular-weight aliphatic and cycloaliphatic alcohols.

Suitable low-molecular-weight alcoholic hardeners include but are not limited to: 1,4-butanediol; ethylene glycol; diethylene glycol; triethylene glycol; neopentyl glycol; 1,3-propanediol; 1,5-pentanediol; 1,6-hexanediol; glycerol; diglycerol; pentaerythritol; dipentaerythritol; and, sugar alcohols such as sorbitol and mannitol.

Suitable higher-molecular-weight polymeric polyols include but are not limited to: polyester polyols; polycarbonate polyols; polyether polyols; polyacrylate polyols; and, polyvinyl alcohols. These polymeric polyol hardeners should typically be characterized by one or more of the following properties: i) an average OH functionality of at least 1.5 mol and preferably at least 1.8, for instance an OH functionality in the range from 1.5 to 10 or 1.8 to 4, wherein said average OH functionality is understood to be the average number of OH groups per polymer chain; ii) a number average molecular weight (Mn) of from 250 to 50,000 g/mol, preferably from 500 to 10,000 g/mol; and, iii) having at least 50 mole % of the hydroxyl groups contained in the polymeric polyol component being primary hydroxyl groups.

More suitable polyester polyols are linear or branched polymeric compounds with ester groups in the polymer backbone, which have free hydroxyl groups at the ends of the polymer chain. Preferably, these are polyesters that are obtained by polycondensation of dihydric alcohols with divalent carboxylic acids, optionally in the presence of polyhydric alcohols (e.g. 3, 4, 5, or 6-hydric alcohols) and / or polyvalent polycarboxylic acids.

As is known in the art, the corresponding di- or polycarboxylic acid anhydrides or the corresponding di- or polycarboxylic acid esters of lower alcohols or mixtures thereof can be used instead of the free di- or polycarboxylic acids in preparing polyester polyols. That aside, the di- or polycarboxylic acids can be aliphatic, cycloaliphatic, araliphatic, aromatic or heterocyclic, preferably have 2 to 50 and in particular 4 to 20 carbon atoms, and optionally can be substituted, for instance by halogen atoms, and/or be unsaturated. Mentioned as examples thereof are: suberic acid, azelaic acid, phthalic acid, isophthalic acid, phthalic anhydride, tetrahydrophthalic anhydride, hexahydrophthalic anhydride, tetrachlorophthalic anhydride, endomethylenetetrahydrophthalic anhydride, glutaric anhydride, maleic acid, maleic anhydride, alkenyl succinic acid, fumaric acid, and dimeric fatty acids.

Suitable diols for preparing said polyester polyols include in particular aliphatic and cycloaliphatic diols having from 2 to 40 and in particular from 2 to 20 carbon atoms, of which diols ethylene glycol, propane-1,2-diol, propane-1,3-diol, butane-1,3-diol, butane-1,4-diol, butene-1,4-diol, butyne-1,4-diol, pentane-1,5-diol, neopentyl glycol, bis(hydroxymethyl)cyclohexanes such as 1,4-bis(hydroxymethyl)cyclohexane, 2-methylpropane-1,3-diol, methylpentane diols, diethylene glycol, triethylene glycol, tetraethylene glycol, polyethylene glycol, dipropylene glycol, polypropylene glycol, dibutylene glycol, and polybutylene glycols may mentioned as examples. Preferred are alcohols of the general formula HO-(CH₂)ₓ-OH, where x is a number from 2 to 20, preferably an even number from 2 to 12; examples thereof are ethylene glycol, butane-1,4-diol, hexane-1,6-diol, octane-1,8-diol, and dodecane-1,12-diol. Preferred furthermore are neopentyl glycol and pentane-1,5-diol.

It is also noted that lactone-based polyester polyols may find utility as alcoholic hardeners in the present invention; these species are homo- or copolymers of lactones, preferably terminal hydroxyl group-containing adducts of lactones to suitable difunctional starter molecules. Lactones that may be used are preferably those derived from compounds of the general formula HO-(CH₂)_{z}-COOH, where z is a number from 1 to 20 and wherein an H atom of a methylene unit can optionally be substituted by a C₁ to C₄ alkyl group. Examples therefore, which may be used individually or in admixture, are ε-caprolactone, β-propiolactone, γ-butyrolactone and methyl-ε-caprolactone; a preference for ε-caprolactone might be mentioned. Suitable starter molecules include the low-molecular-weight alcohols mentioned above as structural components for the polyester polyols and lower polyester diols or polyether diols can also be used as starters for preparing lactone polymers.

Instead of lactone polymers, the corresponding, chemically equivalent polycondensates of hydroxycarboxylic acids corresponding to the lactones may also be used.

Further examples of suitable polyester polyols may be found in Ullmanns Enzyklopädie der Technischen Chemie 4th edition, Volume 19, pages 62 to 65.

Polycarbonate polyols for use herein may be obtainable by reacting phosgene with an excess of those low-molecular-weight alcohols specified as structural components for the polyester polyols.

Suitable polyether polyols for use as hardeners herein may be prepared by polymerization of ethylene oxide, propylene oxide, butylene oxide, tetrahydrofuran, styrene oxide, or epichlorohydrin with itself, for instance in the presence of BF₃, or by addition of these compounds, optionally in a mixture or one after the other, to bi- or polyfunctional starter components having reactive hydrogen atoms. Suitable starter compounds thereby include polyols or polyfunctional amines and non-limiting examples of such compounds are: water; ethylene glycol; propane-1,2-diol; propane-1,3-diol; 1,1-bis(4-hydroxyphenyl)propane; trimethylolpropane; glycerol; sorbitol; ethanolamine; ethylenediamine; sucrose polyethers, as disclosed in DE 1176358 (Pittsburgh Plate Glass Company) and DE 1064938 (Dow Chemical Company); and formitol- or formose-started polyethers, as disclosed in DE 2639083 (Bayer AG) and DE 2737951 (Bayer AG).

Likewise suitable are polyhydroxyolefins, preferably those with 2 terminal hydroxyl groups, such as α,ω-dihydroxypolybutadiene.

Also suitable for use herein as hardeners are polyhydroxypolyacrylates in which the hydroxyl groups can be arranged laterally or terminally. Examples thereof are a,w-dihydroxypoly(meth)acrylic esters, which are obtainable by homo- or copolymerization of alkyl esters of acrylic acid and/or methacrylic acid in the presence of OH group-containing regulators - such as mercaptoethanol or mercaptopropanol - and subsequent transesterification with a low-molecular-weight polyol, for example an alkylene glycol such as butanediol. Such polymers are known, for example, from EP-A 622 378 (Goldschmidt AG). Supplementary examples thereof are polymers obtainable by copolymerization of alkyl esters of acrylic acid and / or methacrylic acid with hydroxyalkyl esters of ethylenically unsaturated carboxylic acid, such as hydroxyethyl acrylate, hydroxypropyl acrylate, hydroxybutyl acrylate, hydroxyethyl methacrylate, hydroxypropyl methacrylate or hydroxybutyl methacrylate.

Polyvinyl alcohols may further be mentioned as a suitable class of alcoholic hardeners, said compounds being preferably obtained by the complete or partial saponification of polyvinyl esters, in particular polyvinyl acetate. If the polyvinyl esters are present partially saponified, preferably at most 50 to 95% of the ester groups are present saponified as hydroxyl groups. If the polyvinyl esters are present completely saponified, generally more than 95% up to 100% of the ester groups are present saponified as hydroxyl groups.

Having regard to the use of higher-molecular-weight polymeric polyols as hardeners herein, good results have been obtained with polyacrylate polyols and in particular those polyacrylate polyols obtainable under the trade name Joncryl® of the company BASF SE, e.g., Joncryl® 945.

### iii) Further Hardeners

As noted above, the multifunctional hardener may comprise mercaptan groups. Non-limiting examples of suitable hardeners in this regard include: liquid mercaptan-terminated polysulfide polymers, known by the trade name Thiokol® (available from Morton Thiokol) and in particular the types LP-3, LP-33, LP-980, LP-23, LP-55, LP-56, LP-12, LP-31, LP-32 and LP-2; liquid mercaptan-terminated polysulfide polymers known by the trade name Thioplast® (available from Akzo Nobel) and in particular the types G10, G112, G131, G1, G12, G21, G22, G44 and G4; mercaptan-terminated polyoxyalkylene ethers obtainable, for example, by reacting polyoxyalkylendiols and -triols with either epichlorohydrin or with an alkyleneoxide, followed by sodium hydrogen sulfide; mercaptan-terminated compounds in the form of polyoxyalkylene derivatives, known by the trade name Capcure® (from Cognis), in particular the types WR-8, LOF and 3-800; polyesters of thiocarboxylic acids, such as pentaerythritol tetramercaptoacetate, trimethylolpropane trimercaptoacetate, glycol dimercaptoacetate, pentaerythritoltetra-(3-mercaptopropionate), trimethylolpropantri-(3-mercaptopropionate) and glycoldi-(3-mercaptopropionate), as well as the esterification products of polyoxyalkylene diols and triols, ethoxylated trimethylolpropane and polyester diols with thiocarboxylic acids such as thioglycolic acid and 2- or 3-mercaptopropionic acid; and, further compounds comprising mercapto groups, such as in particular 2,4,6-trimercapto-1,3,5-triazine, 2,2'-(ethylenedioxy)-diethanethiol (triethyleneglycol-dimercaptan) and ethanedithiol.

It is envisaged that amino acids - such as lysine, arginine, glutamine, and asparagine, as well as stereoisomers thereof and mixtures thereof - may also act as suitable hardeners. Such compounds may, in particular, be useful secondary curing agents: they may for instance be used in the hardener component in admixture with one or more alcoholic hardener or alternatively or additionally, one or more amine hardener.

### Additives and Adjunct Ingredients

As is standard in the art, the two-component composition may comprise additives and adjunct ingredients which may be disposed in one or both of the first and second components. Suitable additives and adjunct ingredients include: catalysts; antioxidants; UV absorbers/light stabilizers; metal deactivators; antistatic agents; reinforcers; fillers; antifogging agents; propellants; biocides; plasticizers; lubricants; emulsifiers; dyes; pigments; rheological agents; impact modifiers; adhesion regulators; optical brighteners; flame retardants; anti-drip agents; nucleating agents; wetting agents; thickeners; protective colloids; defoamers; tackifiers; solvents; reactive diluents; and, mixtures thereof. The selection of suitable conventional additives for the composition of the invention depends on the specific intended use of the two-component composition and can be determined in the individual case by the skilled artisan.

In certain embodiments of the invention, no catalysts will be required to catalyze the reaction of the exo-vinylene cyclic carbonate groups with the functional groups (F) of the hardener: this may typically be the case where primary and secondary amino groups are present as the functional groups (F). However, in other cases and preferably where the hardener has reactive groups F that are different from amino groups, a catalyst may be required: suitable catalysts for the hardening will then be determined in a known manner dependent upon the type of the reactive functional groups (F). The catalysts, when desired, are used in an amount of from 0.01 to 10 wt.%, preferably from 0.01 to 5 wt.%, based on the total weight of the two-component composition.

Basic catalysts, and in particular organic amines and organic phosphines, represent an important class of catalysts in the present invention. Preferred among the organic amines are: amidine bases, such as 1,8-diazabicyclo[5.4.0]undec-7-ene (DBU) and 1,5-diazabicyclo[4.3.0]non-5-ene (DBN); mono-C₁-C₆-alkylamines; di-C₁-C₆-alkylamines; and, tri-C₁-C₆-alkylamines, in particular triethylamine and tert-butylamine. Preferred among the organic phosphines are: trialkylphosphines, such as tri-n-butylphosphine; and, triarylphosphines such as triphenylphosphine. Of course, such basic catalysts can also be used as mixtures, optionally in combination with tri-C₁-C₆-alkylammonium halides and copper salts; as an example, the combination of triphenylphosphine with a tri-C₁-C₆-alkylammonium halide and a copper salt - such as copper(I) chloride, copper(I) bromide, copper(II) chloride, or copper(II) sulfate - may be mentioned.

Fillers included in the two-component composition can be organic or inorganic in nature. Inorganic fillers, such as carbon black, calcium carbonate, titanium dioxide and may find utility where the two-component composition is used as a sealant. Further, highly dispersed silicas, especially pyrogenic silicas or precipitated silicas, may find particular utility as inorganic fillers due to their thixotropic effect. These examples aside, it is preferred that inorganic fillers are present in the form of platelets, which can be aligned to form layers with an intensified barrier effect in regard to fluids and gases. Phyllosilicates such as montmorillonite and hectorite, provide examples thereof and are described *inter alia* in WO 2011/089089 (Bayer Material Science AG), WO 2012/175427 (Bayer IP GMBH) and WO 2012/175431 (Bayer IP GMBH). Most preferred are phyllosilicates that have a layer thickness of from 0.5 to 5 nm, for example from 0.5 to 1.5 nm and an aspect ratio of at least 50, at least 400, at least 1000 or even at least 10,000.

The phyllosilicates can be of natural or synthetic origin. Suitable phyllosilicates are include but are not limited to montmorillonite, bentonite, kaolinite, mica, hectorite, fluorohectorite, saponite, beidellite, nontronite, stevensite, vermiculite, fluorovermiculite, halloysite, volkonskoite, suconite, magadiite, sauconite, stibensite, stipulgite, attapulgite, illite, kenyaite, smectite, allevardite, muscovite, palygorskite, sepiolite, silinaite, grumantite, revdite, zeolite, Fuller's earth, natural or synthetic talk or mica, or permutite. Particularly preferred are montmorillonite (aluminum magnesium silicate), hectorite (magnesium lithium silicate), synthetic fluorohectorite and exfoliated, organically modified smectites. The phyllosilicates can be modified or unmodified, in the latter case cationically modified phyllosilicates being preferred. Cationically modified means that inorganic cations of the phyllosilicate are exchanged at least in part by organic cations, said organic cations being organic compounds that possess at least one cationic group, such as a quaternary ammonium group, phosphonium group, pyridinium group or the like.

Where employed, light stabilizers / UV absorbers, antioxidants and metal deactivators should preferably have a high migration stability and temperature resistance. They may suitable be selected, for example, from the groups a) to t) listed herein below, of which the compounds of groups a) to g) and i) represent light stabilizers/UV absorbers and compounds j) to t) act as stabilizers: a) 4,4-Diarylbutadienes; b) cinnamic acid esters; c) benzotriazoles; d) hydroxybenzophenones; e) diphenyl cyanoacrylates; f) oxamides; g) 2-phenyl-1,3,5-triazines; h) antioxidants; i) nickel compounds; j) sterically hindered amines; k) metal deactivators; l) phosphites and phosphonites; m) hydroxylamines; n) nitrones; o) amine oxides; p) benzofuranones and indolinones; q) thiosynergists; r) peroxide-destroying compounds; s) polyamide stabilizers; and t) basic co-stabilizers.

The two-component composition should comprise less than 5 wt.% of water, based on the weight of the composition, and is most preferably an anhydrous composition that is essentially free of water. These embodiments do not preclude the composition from either comprising organic solvent or being essentially free of organic solvent. In an interesting embodiment, the two-component composition may be characterized by comprising in total less than 5 wt.%, preferably less than 2 wt.%, based on the weight of the two-component composition of water and organic solvent.

Broadly, all organic solvents known to the person skilled in the art can be used as a solvent but it is preferred that said organic solvents are selected from the group consisting of: esters; ketones; halogenated hydrocarbons; alkanes; alkenes; and, aromatic hydrocarbons. Exemplary solvents are methylene chloride, trichloroethylene, toluene, xylene, butyl acetate, amyl acetate, isobutyl acetate, methyl isobutyl ketone, methoxybutyl acetate, cyclohexane, cyclohexanone, dichlorobenzene, diethyl ketone, diisobutyl ketone, dioxane, ethyl acetate, ethylene glycol monobutyl ether acetate, ethylene glycol monoethyl acetate, 2-ethylhexyl acetate, glycol diacetate, heptane, hexane, isobutyl acetate, isooctane, isopropyl acetate, methyl ethyl ketone, tetrahydrofuran or tetrachloroethylene or mixtures of two or more of the recited solvents.

### Methods and Applications

To form an adhesive or sealant composition, the first and second components are brought together and mixed in such a manner as to induce the hardening of the binder. For certain coatings applications, the binder and hardener components may be mixed by hand or by machine in pre-determined amounts. For instance, for small-scale applications in which volumes of less than 1 liter will generally be used, the preferred packaging for the two-component compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger applications, particularly for applications in industrial manufacture, the two components of the composition may advantageously be stored in drums or pails: in this case the two components are extruded via hydraulic presses, in particular by way of follower plates, and are supplied via pipelines to a mixing apparatus which can ensure fine and highly homogeneous mixing of the hardener and binder components. In any event, for any package it is important that the binder component be disposed with an airtight and moisture-tight seal, so that both components can be stored for a long time, ideally for 12 months or longer.

The hardening of the binder compositions of the invention typically occurs at temperatures in the range of from -10°C to 150°C, preferably from 0°C to 100°C, and in particular from 10°C to 70°C. The temperature that is suitable depends on the specific hardeners and the desired hardening rate and can be determined in the individual case by the skilled artisan, using simple preliminary tests if necessary. Of course, hardening at temperatures of from 5°C to 35°C or from 20°C to 30°C is especially advantageous as it obviates the requirement to substantially heat or cool the mixture from the usually prevailing ambient temperature. Where applicable, however, the temperature of the mixture of binder and hardener may be raised above the mixing temperature using conventional means, including microwave induction.

The compositions according to the invention may find utility *inter alia* in: varnishes; inks; elastomers; foams; binding agents for fibers and / or particles; the bonding and sealing of glass; the bonding and sealing of mineral building materials, such as lime- and / or cement-bonded plasters, gypsum-containing surfaces, fiber cement building materials and concrete; the bonding and sealing of wood and wooden materials, such as chipboard, fiber board and paper; the bonding and sealing of metallic surfaces; the bonding and sealing of asphalt- and bitumen-containing pavements; the bonding and sealing of various plastic surfaces; and, the bonding and sealing of leather and textiles.

It is also considered that the compositions of the present invention are suitable as pourable sealing compounds for electrical building components such as cables, fiber optics, cover strips or plugs. The sealants may serve to protect those components against the ingress of water and other contaminants, against heat exposure, temperature fluctuation and thermal shock, and against mechanical damage.

By virtue of the fact that the two-component compositions of the present invention are capable of creating a high binding strength in a short time, often at room temperature - particularly where amine hardeners are employed - the compositions are optimally used for forming composite structures by surface-to-surface bonding of the same or different materials to one another. The binding together of wood and wooden materials and the binding together of metallic materials may be mentioned as exemplary adhesive applications of the present compositions.

In a particularly preferred embodiment of the invention, the two-component compositions are used as solvent-free or solvent-containing lamination adhesives for gluing plastic and polymeric films, such as polyolefin films, poly(methylmethacrylate) films, polycarbonate films and Acrylonitrile Butadiene Styrene (ABS) films.

In each of the above described applications, the compositions may applied by conventional application methods such as: brushing; roll coating using, for example, a 4-application roll equipment where the composition is solvent-free or a 2-application roll equipment for solvent-containing compositions; doctor-blade application; printing methods; and, spraying methods, including but not limited to air-atomized spray, air-assisted spray, airless spray and high-volume low-pressure spray. For adhesive applications, it is recommended that the compositions be applied to a wet film thickness of from 10 to 500 µm. The application of thinner layers within this range is more economical and provides for a reduced likelihood of thick cured regions that may - for adhesive applications - require sanding. However, great control must be exercised in applying thinner coatings or layers so as to avoid the formation of discontinuous cured films.

Various features and embodiments of the disclosure are described in the following examples, which are intended to be representative and not limiting.

### EXAMPLES

The following details and / or notations are given for specific chemicals used in the Examples:
- IPDA:: Isophorone diamine
- TMS:: Trimethylsilyl
- THF:: Tetrahydrofuran
- PMDETA:: Pentamethyldiethylenetriamine
- AgOAc:: Silver acetate
- THP:: Tetrahydropyran
- Jeffamine D-205:: Polyetherdiamine available from Huntsman Performance Products (Everberg, BE)
- Jeffamine D-230:: Polyetherdiamine based on oxypropylene available from Huntsman Performance Products (Everberg, BE)
- ABS:: Acrylonitrile Butadiene Styrene polymer
- PC:: Polycarbonate
- PMMA:: Poly(methyl methacrylate)

### Synthesis Example 1: Preparation of an exo-vinylene cyclic carbonate dimethylacetal

The preparation occurs in two steps as depicted herein below:

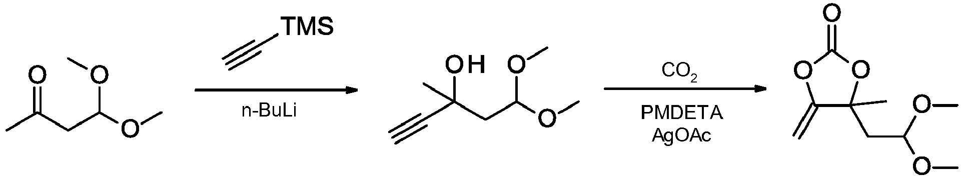

### Step 1: Ethinylation of 4,4-dimethoxybutan-2-one

Trimethylsilylacetylene (982 g, 10 mol) is charged in THF (17 L, dried over a molecular sieve) under argon and cooled to -68°C. n-Butyllithium (2.5 M in hexane, 4 L) is added dropwise at -68°C with stirring over 1 hour and stirred for another 1 hour. The ketone (1.319 kg, 10 mol) is then added dropwise, at a temperature from -68°C to -54°C, over 30 minutes: the mixture is subsequently stirred for another 15 minutes. Next, the mixture is heated to 9°C and water (2.9 L) is added in one portion. In so doing, the temperature rises to about 17°C. The reaction mixture is carefully concentrated at 45°C / 8 torr (10.7 mbar). It is ascertained by gas chromatographic (GC) analysis that a TMS-protected product is no longer present. The residue is suspended in diethyl ether (750 mL) and filtered, and the filtration residue is again washed with diethyl ether. The filtrate is concentrated under vacuum. About 1.2 kg of the raw material remains as a brown liquid. About 1.1 kg (7 mol, 70%) of the ethinylated product is obtained as a colorless oil therefrom by vacuum distillation (5 mbar) at 64°C to 68°C. The so-obtained product had a purity of > 96% (GC area %).

### Step 2: Ring closure with CO₂

The acetylene alcohol (1233 g; 7.79 mol) obtained in Step 1 is charged in acetonitrile (1.2 L) and mixed with PMDETA (138.9 g; 0.8 mol) and AgOAc (12.9 g; 0.078 mol) in a stirred autoclave. A pressure of 50 bar CO₂ is applied and the mixture is stirred for 2.5 hours. The temperature increases to 75°C. After cooling to room temperature, the reaction mixture pressure is reduced to normal pressure, and the mixture is filtered and concentrated at 100°C / 5 mbar. About 1.5 kg of the raw material remains as a brown liquid. About 1.39 kg of the carbonate is obtained therefrom as an orange oil, which crystallizes completely overnight (optionally after addition of some seed crystals), by vacuum distillation at 5 mbar at 114°C to 115°C. The crystal mass is mixed with cyclohexane (1.34 L) and filtered with suction, and the residue is washed again with cyclohexane (0.45 L). After drying under vacuum, 1.29 kg (6.38 mol, 64%) of a nearly colorless solid is obtained. The so-obtained product (hereinafter SE1) had a purity of > 99% (GC area %).

### Synthesis Example 2: Transacetalization of SE1 with 1,8-octanediol

In a 3-neck flask equipped with a stirrer, thermometer and vacuum connection, 300 g of the compound SE1, 282 g of 1,8-octanediol and 2.5 g of p-toluenesulfonic acid were suspended in 410 g of acetonitrile and heated to an external temperature of 55°C. A vacuum was drawn and the solvent distilled off: the internal temperature was not permitted to fall below 50°C over a period of 8 hours. Vacuum was then drawn for 15 hours at room temperature and the mixture was again degassed for 8 hours at an external temperature of 50°C. The mixture was then taken up in 400 g of methyl-tert-butyl ether, washed 3 times with 150 mL of a buffer solution (pH 7), dried with MgSO₄, and filtered: the solvent was rotary evaporated. About 457 g of a reddish-brown, viscous liquid (hereinafter SE2) was thus obtained, said liquid having an zero-shear viscosity of 14 Pa·s as determined at 23°C.

### Synthesis Example 3: SE2, THP Protected

49.97 g of SE2 (OH value 124 mg KOH/g, 10.45 meq OH, 100 eq.%) and 13.94g of 3,4-Dihydro-2H-pyrane (DHP, 15.0 mL, 165.68 meq, 150 eq.%) were dissolved in CH₂Cl₂ at room temperature under nitrogen atmosphere. Pyridinium-para-toluenesulfonate (PPTS, 2.78 g, 11.05 meq, 10 eq%) was added in one portion and the mixture was stirred at room temperature for 16 h. Et₂O (100 mL) and half-saturated brine solution (100 mL) were added, and the derived organic layer was washed with half-saturated NaCl (50 mL). Drying over MgSO₄, filtering and concentration under reduced pressure yielded the desired product (hereinafter SE3) as a yellow low viscosity liquid (54.46 g, 92%). Conversion was confirmed by ¹H and ¹³C NMR. OH value determination according to DGF C-V 17a (53) gave a value of 0.5 mg KOH/g.

### Synthesis Example 4: Transacetalization of SE1 with 3-methyl-1,5-pentanediol

In a 3-neck flask equipped with a stirrer, thermometer, and vacuum connection, 50 g of the compound SE1, 38 g of 3-methyl-1,5-pentanediol and 0.85 g of p-toluenesulfonic acid were suspended in 50 g of acetonitrile and heated to 45°C. A vacuum was drawn, the solvent was distilled off and the mixture was distilled overall for 8 hours at 45°C and for 12 hours at room temperature. The mixture was then taken up in 100 g of methyl-tert-butyl ether, washed 3 times with 50 mL of a buffer solution (pH 7), dried with MgSO₄, and filtered, and the solvent was rotary evaporated. 50.5 g of a yellow, viscous liquid (hereinafter SE4) was obtained, said liquid having a zero-shear viscosity of 40 Pa.s as determined at 23°C.

### Synthesis Example 5: Transacetalization of SE1 with cyclohexyl-1,4-dimethanol

In a 3-neck flask equipped with a stirrer, thermometer, and vacuum connection, 20 g of SE1, 18.5 g of cyclohexyl-1 ,4-dimethanol, and 0.34 g of p-toluenesulfonic acid were suspended in 20 g of acetonitrile and heated to 45°C. A vacuum was drawn, the solvent was distilled off, and the mixture was distilled overall for 8 hours at 45°C and for 12 hours at room temperature. The mixture was then taken up in 100 g of methyl-tert-butyl ether, washed 3 times with 50 mL of a buffer solution (pH 7), dried with MgSO₄, and filtered, and the solvent was rotary evaporated. 27g of a yellow, highly viscous liquid (hereinafter SE5) was obtained, said liquid having a zero-shear viscosity of 425 Pa.s as determined at 23°C.

The above described synthesized compounds (SE2 - SE5) were utilized in two-component (2K) compositions in accordance with the following Examples.

### Example 1: Material properties of hybrid ketourethane / ketocarbonate polymer from SE2 and Jeffamine D-205

At various equivalencies, SE2 was mixed with Jeffamine D-205 at room temperature. Each obtained formulation was cast into a 2 mm thick sheet,with the help of Polytetrafluoroethylene (PTFE) mold, and allowed to cure at room temperature. After the absence of the infrared (IR) cyclic carbonate band (c. 1830 cm⁻¹) indicated full cure, tensile testing specimens S2 ("dog bones" or "paddles") according to DIN 53504 (ISO 37) for each formulation were cut and tensile testing performed accordingly at 23°C ± 2°C.

The results given in Table 1 below represent the averaged stress and strain values from a minimum of 5 samples for every formulation.

**Table 1. Tensile Material Properties of SE2 Cured with Different Amine Amounts**

| **Formulation** | **Eq.% of Jeffamine D-205** | **Amount of SE2 (g)** | **Amount of Jeffamine D-205 (g)** | **Max. stress (sigma max) [MPa]** | **Max. strain (elongation at break) [%]** |
|---|---|---|---|---|---|
| 1 | 25 | 16.0 | 1.3 | 0.9 | 15.3 |
| 2 | 50 | 16.0 | 2.5 | 1.4 | 16.4 |
| 3 | 100 | 13.0 | 4.1 | 0.6 | 25.5 |

### Example 2: Lap Shear Testing of hybrid ketourethane / ketocarbonate polymers derived from each of SE2, SE4 and SE5 and Jeffamine D-205

Independently, each of SE2, SE4 and SE5 are mixed at room temperature with Jeffamine D-205 at 50% equivalence of said diamine. For completeness: 2.0 g (5.38 meq) of SE2 was mixed with 0.31 g (2.69 meq) of Jeffamine D-205; 2.0 g of SE4 (5.94 meq) was mixed with 0.35 g of Jeffamine D-205 (2.97 meq); and, 2.0 g of SE5 (5.60 meq) was mixed with 0.325 g of Jeffamine D-205 (2.80 meq).

In accordance with DIN EN 1465, each formulation obtained was used to prepare lap shear specimens for each of the following compound combinations: wood-wood; steel-steel; and, ABS-ABS. The samples, together with leftover adhesive mixture, were stored at 50°C, until the absence of the infrared (IR) band at c. 1830 cm⁻¹ indicated the complete consumption of the cyclic carbonates in the leftover mixture. Lap shear testing was performed according to the aforementioned norm.

The results given in Table 2 below represent the averaged lap shear strength values (MPa) of at least 5 tested samples for every formulation and material combination.

**Table 2. Lap Shear Strengths of VCC Compounds Cured with Jeffamine D-205 (50 eq.%).**

| **VCC Compound** | **Lap Shear Strength (MPa)** | | |
|---|---|---|---|
| | **Wood-Wood** | **Steel-Steel** | **ABS-ABS** |
| SE2 | 3.7 | 2.8 | 1.1 |
| SE4 | 5.5 | 3.9 | 1.1 |
| SE5 | 8.0 | 6.5 | 0.9 |

### Example 3: Lap Shear Testing of hybrid ketourethane / ketocarbonate polymers derived from SE2 and IPDA

1.8 g of SE2 (4.84 meq) was mixed with 0.2 g of IPDA (2.42 meq) at room temperature. In accordance with DIN EN 1465, the formulation obtained was quickly used to prepare lap shear specimens for each of the following compound combinations: wood-wood; steel-steel; and, ABS-ABS. The samples, together with leftover adhesive mixture, were stored at room temperature, until the absence of the infrared (IR) band at c. 1830 cm⁻¹ indicated the complete consumption of the cyclic carbonates in the leftover mixture. Lap shear testing was performed according to the aforementioned norm.

The results given in Table 3 below represent the averaged lap shear strength values (MPa) of at least 5 tested samples for each material combination.

**Table 3. Lap Shear Strengths of SE2 cured with IPDA (50 eq.%)**

| **VCC Compound** | **Lap Shear Strength (MPa)** | | |
|---|---|---|---|
| | **Wood-Wood** | **Steel-Steel** | **ABS-ABS** |
| SE2 | 8.6 | 6.0 | 1.1 |

### Example 4: Lap Shear Testing of hybrid ketourethane / ketocarbonate polymers derived from SE3 and IPDA (100 eq%)

To 2.0g of the protected VCC compound, SE3 (4.48 meq) was added 0.4g of IPDA (4.48 meq, 100 eq.%) at room temperature. After a quick homogenization, lap shear specimen were prepared for each of the following compound combinations, according to DIN EN 1465: wood-wood; steel-steel and, ABS-ABS. The samples, together with leftover adhesive mixture, were stored at room temperature until the absence of the infrared (IR) band at c. 1830 cm⁻¹ indicated the complete consumption of the cyclic carbonates in the leftover mixture. Lap shear testing was performed according to the aforementioned norm.

The results given in Table 4 below represent the averaged lap shear strength values (MPa) of at least 5 tested samples for each material combination.

**Table 4. Lap Shear Strengths of SE3 cured with IPDA (100 eq.%).**

| **VCC Compound** | **Lap Shear Strength (MPa)** | | |
|---|---|---|---|
| | **Wood-Wood** | **Steel-Steel** | **ABS-ABS** |
| SE3 | 8.0 | 8.0 | 1.3 |

In a similar experiment, 0.5g (2.42 meq) of state-of-the-art siloxane tethered exo-vinylene carbonate (SiVCC) was melted at 90°C. 0.215g of IPDA (2.42 meq) was added quickly and the mixture homogenized. The mixture almost instantaneously formed a film, before the production of lap shears was possible.

### Example 5: Lap shear testing of hybrid ketourethane / ketocarbonate polymers derived from SE3 and both IPDA (50 eq.%) and Jeffamine D-230 (50 eq.%)

To 2.00 g of the protected VCC compound, SE3 (4.48 meq) was added 0.27 g of Jeffamine D-230 (2.24 meq, 50 eq.%) followed by 0.19g of IPDA (2.24 meq. 50 eq.%) at room temperature. After a quick homogenization, lap shear specimen were prepared for each of the following compound combinations, according to DIN EN 1465: wood-wood; steel-steel; ABS-ABS; PC-PC; and, PMMA-PMMA. The samples, together with leftover adhesive mixture, were stored at room temperature until the absence of the infrared (IR) band at c. 1830 cm⁻¹ indicated the complete consumption of the cyclic carbonates in the leftover mixture. Lap shear testing was performed according to the aforementioned norm.

In a similar experiment, 2.00g state-of-the-art siloxane tethered exo-vinylene carbonate (SiVCC, 9.65 meq) was melted at 90 °C. A preheated (90°C) mixture of 0.41 g of IPDA (4.82 meq, 50 eq.%) and 0.58 g of Jeffamine D-230 (4.82 meq, 50 eq.%) was added quickly and the mixture homogenized. Under these conditions, lap shears could be prepared for each of the following compound combinations, according to DIN EN 1465: wood-wood; steel-steel; ABS-ABS; PC-PC; and, PMMA-PMMA. The samples, together with leftover adhesive mixture, were stored at room temperature until the absence of the infrared (IR) band at c. 1830 cm⁻¹ indicated the complete consumption of the cyclic carbonates in the leftover mixture. Lap shear testing was performed according to the aforementioned norm.

The results given in Table 5 below represent the averaged lap shear strength values (MPa) of at least 5 tested samples for each material combination.

**Table 5. Lap Shear Strengths of SE3 cured with IPDA (50 eq.%) and Jeffamine D-230 (50 eq.%)**

| **VCC Compound** | **Lap Shear Strength (MPa)** | | | | |
|---|---|---|---|---|---|
| | **Wood-Wood** | **Steel-Steel** | **ABS-ABS** | **PC** | **PMMA** |
| SE3 | 1.4 | 1.9 | 0.8 | 1.1 | 1.1 |
| SiVCC | 2.2 | 2.1 | 0.9 | 0.4 | 0.9 |

In view of the foregoing description and examples, it will be apparent to those skilled in the art that equivalent modifications thereof can be made without departing from the scope of the claims.

## Claims

1. A two-component sealant and/or adhesive composition comprising:
i) in a first component, at least one compound (VCC) having two or more exo-vinylene cyclic carbonate units, wherein said exo-vinylene cyclic carbonate units are bonded to one another by means of at least one organic, siloxane-free linking group, wherein said linking group is not directly bonded to the exo-vinylene double bonds and linking groups formed by polymerization of (meth)acrylic monomers are excluded; and,
ii) in a second component, at least one multifunctional hardener that has at least two functional groups (F) selected from the group consisting of primary amino groups, secondary amino groups, hydroxy groups, phosphine groups, phosphonate groups, and mercaptan groups,
wherein the compound (VCC) of said first component is **characterized in that** it has at least one acetal group in the linking group.

2. The two-component composition according claim 1, wherein in said compound (VCC) the exo-vinylene cyclic carbonate units are 5-alkylidene-1,3-dioxolan-2-one units of general formula (I): 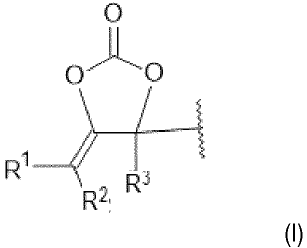 wherein:
the at least one organic, siloxane-free linking group is located between the 4 positions of the 5-alkylidene-1,3-dioxolan-2-one units; and,
R¹ to R³ are, independently of one another, hydrogen or an organic functional group.

3. The two-component composition according to any one of claims 1 or 2, wherein the compound (VCC) meets either:
i) Formula (II): 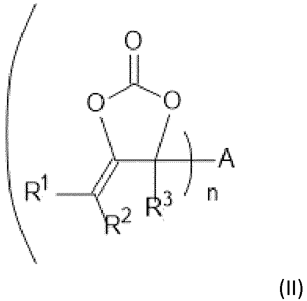 wherein:
R¹ to R³ are, independently of one another, hydrogen or an organic functional group;
n is a number that is greater than or equal to 2, preferably from 2 to 10; and,
A is a siloxane-free organic linking group, with the exception of a linking group formed by polymerization of (meth)acrylic monomers;
ii) Formula (III): 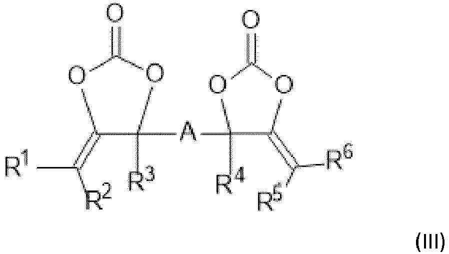 wherein:
R¹ to R⁶ are, independently of one another, hydrogen or an organic functional group; and,
A is a siloxane-free organic linking group comprising at least one acetal group, with the exception of a linking group formed by polymerization of (meth)acrylic monomers;
iii) Formula (IV): 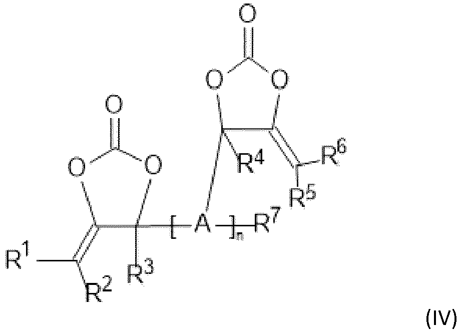 wherein:
R¹ to R⁶ are, independently of one another, hydrogen or an organic functional group;
R⁷ is hydrogen, an OH group or an organic functional group;
A is a siloxane-free organic linking group, with the exception of a linking group formed by polymerization of (meth)acrylic monomers; and,
n is a number that is greater than or equal to 1, preferably from 1 to 10;
or,
iv) Formula (V), 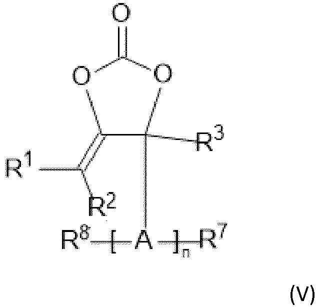 wherein:
R¹ to R³ are, independently of one another, hydrogen or an organic functional group;
R⁷ and R⁸ are, independently of one another, hydrogen, an OH group or an organic functional group, and R⁷ and/or R⁸ can contain an exo-vinylene cyclic carbonate group;
A is a siloxane-free organic linking group, with the exception of a linking group formed by polymerization of (meth)acrylic monomers; and
n is a number that is greater than or equal to 1 if at least one of the functional groups R⁷ and R⁸ contains at least one exo-vinylene cyclic carbonate group, and n is a number that is greater than or equal to 2, preferably from 2 to 10, if neither of the functional groups R⁷ and R⁸ contains an exo-vinylene cyclic carbonate group.

4. The two-component composition according to claim 3, wherein -A in said Formulas (II), (IV) and (V) has at least one acetal group.

5. The two-component composition according to any one of claims 1 to 4, wherein the total amount of multifunctional hardener present in the second component is selected so that the molar ratio of functional alkylidene-1,3-dioxolan-2-one groups of said first component to the functional groups (F) in the hardener is in the range of from 1:10 to 10:1, preferably in the range of from 1:2 to 2:1.

6. The two-component composition according to any one of claims 1 to 5, wherein the total amount of multifunctional hardener present in the second component is from 0.1 to 50 wt.%, preferably from 1 to 30 wt.%, based on the combined total amount of exo-vinylene cyclic carbonate compounds and said multifunctional hardeners.

7. The two-component composition according to any one of claims 1 to 6, wherein the functional groups (F) of the hardener are selected from the group consisting of: aliphatic hydroxyl groups; aliphatic primary amino groups; aliphatic secondary amino groups; and, mixtures thereof.

8. The two-component composition according to any one of claims 1 to 7, wherein the multifunctional hardener comprises at least one of a multifunctional polyetheramine and a difunctional amine selected from the group consisting of aliphatic, cycloaliphatic and aromatic diamines.

9. The two-component composition according to any one of claims 1 to 8, wherein the multifunctional hardener comprises one or more alcohols selected from the groups consisting of: 1 ,4-butanediol; ethylene glycol; diethylene glycol; triethylene glycol; neopentyl glycol; 1,3-propanediol; 1,5-pentanediol; 1,6-hexanediol; glycerol; diglycerol; pentaerythritol; dipentaerythritol; and, sugar alcohols, such as sorbitol and mannitol.

10. The two-component composition according to any one of claims 1 to 9, wherein:
the multifunctional hardener comprises one or more polymeric polyols selected from the group consisting of polyester polyols, polycarbonate polyols, polyether polyols, polyacrylate polyols and polyvinyl alcohols; and,
said polymeric polyol hardeners are **characterized by** one or more of the following properties:
i) an average OH functionality of at least 1.5 mol;
ii) a number average molecular weight (Mn) of from 250 to 50,000 g/mol; and,
iii) at least 50 mole % of the hydroxyl groups contained in the polymeric polyol being primary hydroxyl groups.

11. The two-component composition according to any one of claims 1 to 10 further comprising a catalyst in an amount of from 0.01 to 10 wt.%, preferably from 0.01 to 5 wt.%, based on the total weight of the two-component composition.

12. The two-component composition according to any one of claims 1 to 11 comprising less than 0.1 wt.%, based on the weight of the two-component composition, of water.

13. The two-component composition according to any one of claims 1 to 12 comprising less than 0.1 wt.%, based on the weight of the two-component composition, of NCO groups.

14. A method of forming a composite article comprising the steps of:
a) providing first and second substrates;
b) applying the two component composition as defined in any one of claims 1 to 13 to at least one of said substrates; and,
c) assembling said first and second substrates.

## Patentansprüche

1. Zweikomponenten-Dichtstoff- und/oder Klebstoffzusammensetzung, umfassend:
i) in einer ersten Komponente mindestens eine Verbindung (VCC) mit zwei oder mehr cyclischen Exo-Vinylencarbonateinheiten, wobei die cyclischen Exo-Vinylencarbonateinheiten durch mindestens eine organische siloxanfreie verbindende Gruppe aneinander gebunden sind, wobei die verbindende Gruppe nicht direkt an die Exo-Vinylendoppelbindungen gebunden ist und die verbindenden Gruppen, die durch eine Polymerisation von (Meth)acrylmonomeren ausgebildet werden, ausgeschlossen sind; und
ii) in einer zweiten Komponente mindestens einen multifunktionalen Härter, der mindestens zwei Reste (F) aufweist, ausgewählt aus der Gruppe, bestehend aus primären Aminogruppen, sekundären Aminogruppen, Hydroxygruppen, Phosphingruppen, Phosphonatgruppen und Mercaptangruppen,
wobei die Verbindung (VCC) der ersten Komponente **dadurch gekennzeichnet ist, dass** sie mindestens eine Acetalgruppe in der verbindenden Gruppe aufweist.

2. Zweikomponenten-Zusammensetzung nach Anspruch 1, wobei in der Verbindung (VCC) die cyclischen Exo-Vinylencarbonateinheiten 5-Alkyliden-1,3-dioxolan-2-on-Einheiten der allgemeinen Formel (I) sind: 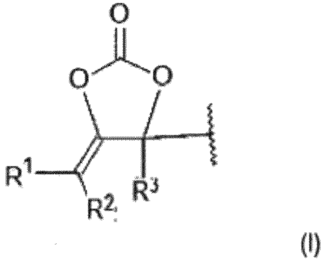 wobei:
die mindestens eine organische, siloxanfreie verbindende Gruppe zwischen den 4 Positionen der 5-Alkyliden-1,3-dioxolan-2-on-Einheiten gelegen ist; und,
R¹ bis R³ unabhängig voneinander Wasserstoff oder ein organischer Rest sind.

3. Zweikomponenten-Zusammensetzung nach einem der Ansprüche 1 oder 2, wobei die Verbindung (VCC) entweder erfüllt:
i Formel (II): 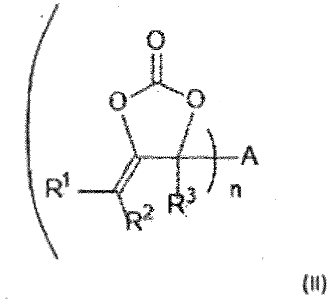 wobei:
R¹ bis R³ unabhängig voneinander Wasserstoff oder ein organischer Rest sind;
n eine Zahl ist, die größer oder gleich 2 ist, vorzugsweise von 2 bis 10; und,
A eine siloxanfreie organische verbindende Gruppe ist, mit der Ausnahme einer verbindenden Gruppe, die durch Polymerisation von (Meth)acrylmonomeren ausgebildet wird;
ii) Formel (III): 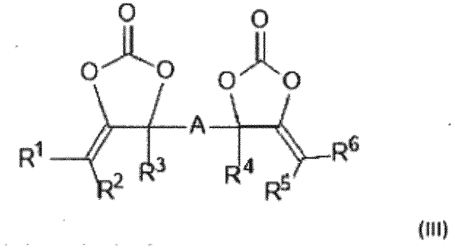 wobei:
R¹ bis R⁶ unabhängig voneinander Wasserstoff oder ein organischer Rest sind; und
A eine siloxanfreie organische verbindende Gruppe ist, die mindestens eine Acetalgruppe umfasst, mit der Ausnahme einer verbindenden Gruppe, die durch Polymerisation von (Meth)acrylmonomeren ausgebildet wird;
iii) Formel (IV): 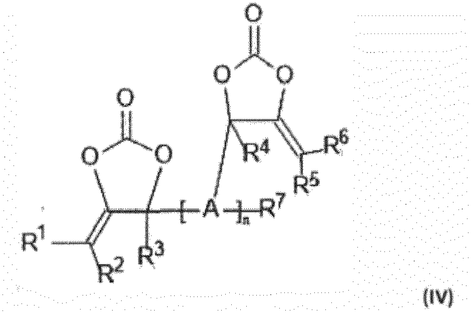 wobei:
R¹ bis R⁶ unabhängig voneinander Wasserstoff oder ein organischer Rest sind;
R⁷ Wasserstoff, eine OH-Gruppe oder ein organischer Rest ist;
A ist eine siloxanfreie organische verbindende Gruppe ist, mit der Ausnahme einer verbindenden Gruppe, die durch Polymerisation von (Meth)acrylmonomeren ausgebildet wird; und
n eine Zahl ist, die größer oder gleich 1 ist, vorzugsweise von 1 bis 10; oder,
iv) Formel (V): 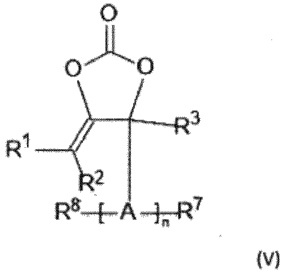 wobei:
R¹ bis R³ unabhängig voneinander Wasserstoff oder ein organischer Rest sind;
R⁷ und R⁸ unabhängig voneinander Wasserstoff, eine OH-Gruppe oder ein organischer Rest sind, und R⁷ und/oder R⁸ eine cyclische Exo-Vinylencarbonatgruppe enthalten kann;
A eine siloxanfreie organische verbindende Gruppe ist, mit der Ausnahme einer verbindenden Gruppe, die durch Polymerisation von (Meth)acrylmonomeren ausgebildet wird; und
n eine Zahl ist, die größer oder gleich 1 ist, wenn mindestens einer der Reste R⁷ und R⁸ mindestens eine cyclische Exo-Vinylencarbonatgruppe enthält, und
n eine Zahl ist, die größer oder gleich 2 ist, vorzugsweise von 2 bis 10, wenn keiner der Reste R⁷ und R⁸ eine cyclische Exo-Vinylencarbonatgruppe enthält.

4. Zweikomponenten-Zusammensetzung nach Anspruch 3, wobei -A in den Formeln (II), (IV) und (V) mindestens eine Acetalgruppe aufweist.

5. Zweikomponenten-Zusammensetzung nach einem der Ansprüche 1 bis 4, wobei die Gesamtmenge von multifunktionalem Härter, der in der zweiten Komponente vorhanden ist, derart ausgewählt ist, dass das Molverhältnis von Alkyliden-1,3-dioxolan-2-on-Resten der ersten Komponente zu den Resten (F) in dem Härter in dem Bereich von 1:10 bis 10:1 liegen, vorzugsweise in dem Bereich von 1:2 bis 2:1.

6. Zweikomponenten-Zusammensetzung nach einem der Ansprüche 1 bis 5, wobei die Gesamtmenge von multifunktionalem Härter, der in der zweiten Komponente vorhanden ist, von 0,1 bis 50 Gew.%, vorzugsweise von 1 bis 30 Gew.%, bezogen auf die kombinierte Gesamtmenge an cyclischen Exo-Vinylencarbonatverbindungen und der multifunktionellen Härter ist.

7. Zweikomponenten-Zusammensetzung nach einem der Ansprüche 1 bis 6, wobei die Reste (F) des Härters aus der Gruppe ausgewählt sind, bestehend aus aliphatischen Hydroxylgruppen; aliphatischen primären Aminogruppen; aliphatischen sekundären Aminogruppen; und Mischungen davon.

8. Zweikomponenten-Zusammensetzung nach einem der Ansprüche 1 bis 7, wobei der multifunktionelle Härter mindestens eines eines multifunktionalen Polyetheramin und eines difunktionalen Amin umfasst, ausgewählt aus der Gruppe bestehend aus aliphatischen, cycloaliphatischen und aromatischen Diaminen.

9. Zweikomponenten-Zusammensetzung nach einem der Ansprüche 1 bis 8, wobei der multifunktionelle Härter einen oder mehrere Alkohole umfasst, ausgewählt aus den Gruppen bestehend aus 1,4-Butandiol; Ethylenglykol; Diethylenglykol; Triethylenglykol; Neopentylglykol; 1,3-Propandiol; 1,5-Pentandiol; 1,6-Hexandiol; Glycerin; Diglycerin; Pentaerythrit; Dipentaerythrit; und Zuckeralkoholen wie Sorbit und Mannit.

10. Zweikomponenten-Zusammensetzung nach einem der Ansprüche 1 bis 9, wobei:
der multifunktionale Härter ein oder mehrere Polymerpolyole umfasst, ausgewählt aus der Gruppe bestehend aus Polyesterpolyolen, Polycarbonatpolyolen, Polyetherpolyolen, Polyacrylatpolyolen und Polyvinylalkoholen; und
die Polymerpolyolhärter durch eine oder mehrere der folgenden Eigenschaften gekennzeichnet sind:
i) eine durchschnittliche OH-Funktionalität von mindestens 1,5 mol;
ii) ein zahlenmittleres Molekulargewicht (Mn) von 250 bis 50.000 g/mol; und,
iii) mindestens 50 Mol% der Hydroxylgruppen, die in dem Polymerpolyol enthalten sind, primäre Hydroxylgruppen sind.

11. Zweikomponenten-Zusammensetzung nach einem der Ansprüche 1 bis 10, die ferner einen Katalysator in einer Menge von 0,01 bis 10 Gew.%, vorzugsweise von 0,01 bis 5 Gew.% bezogen auf das Gesamtgewicht der Zweikomponenten-Zusammensetzung, umfasst.

12. Zweikomponenten-Zusammensetzung nach einem der Ansprüche 1 bis 11, umfassend weniger als 0,1 Gew.% von Wasser bezogen auf das Gewicht der Zweikomponenten-Zusammensetzung.

13. Zweikomponenten-Zusammensetzung nach einem der Ansprüche 1 bis 12, umfassend weniger als 0,1 Gew.% von NCO-Gruppen bezogen auf das Gewicht der Zweikomponenten-Zusammensetzung.

14. Verfahren zum Ausbilden eines Verbunderzeugnisses, das die Schritte umfasst:
a) Bereitstellen eines ersten und eines zweiten Substrats;
b) Aufbringen der Zweikomponenten-Zusammensetzung nach einem der Ansprüche 1 bis 13 auf mindestens eines der Substrate; und,
c) Zusammensetzen des ersten und des zweiten Substrats.

## Revendications

1. Produit d'étanchéité et/ou composition adhésive à deux composants comprenant :
i) dans un premier composant, au moins un composé (VCC) ayant deux ou plusieurs motifs carbonate cycliques d'exo-vinylène, dans lequel lesdits motifs carbonate cycliques d'exo-vinylène sont liés l'un à l'autre au moyen d'au moins un groupe de liaison organique sans siloxane, dans lequel ledit groupe de liaison n'est pas directement lié aux doubles liaisons de l'exo-vinylène et les groupes de liaison formés polymérisation de monomères (méth)acryliques sont exclus ; et
ii) dans un second composant, au moins un agent durcisseur multifonctionnel qui a au moins deux groupes fonctionnels (F) choisis dans le groupe constitué des groupes amino primaires, des groupes amino secondaires, des groupes hydroxy, des groupes phosphine, des groupes phosphonate et des groupes mercaptan,
dans lequel le composé (VCC) dudit premier composant est **caractérisé en ce qu'**il a au moins un groupe acétal dans le groupe de liaison.

2. Composition à deux composants selon la revendication 1, dans laquelle dans ledit composé (VCC) les motifs carbonate cycliques d'exo-vinylène sont des motifs 5-alkylidène-1,3-dioxolan-2-one de formule générale (I) : 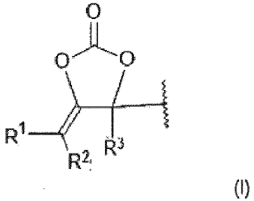 dans laquelle :
le au moins un groupe de liaison organique sans siloxane est situé entre I es 4 positions des motifs 5-alkylidène-1,3-dioxolan-2-one ; et
R¹ à R³ sont, indépendamment les uns des autres, un atome d'hydrogène ou un groupe organique fonctionnel.

3. Composition à deux composants selon l'une quelconque des revendications 1 ou 2, dans laquelle le composé (VCC) satisfait soit à :
i) la formule (II) : 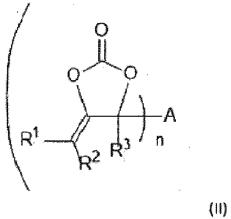 dans laquelle :
R¹ à R³ sont, indépendamment les uns des autres, un atome d'hydrogène ou un groupe organique fonctionnel ;
n est un nombre qui est supérieur ou égal à 2, de préférence de 2 à 10 ; et
A est un groupe de liaison organique sans siloxane, à l'exception d'un groupe de liaison formé par polymérisation de monomères (méth)acryliques ;
ii) la formule (III) : 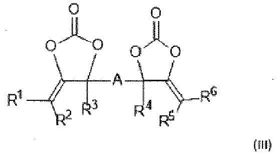 dans laquelle :
R¹ à R⁶ sont, indépendamment les uns des autres, un atome d'hydrogène ou un groupe organique fonctionnel ; et
A est un groupe de liaison organique sans siloxane comprenant au moins un groupe acétal, à l'exception d'un groupe de liaison formé par polymérisation de monomères (méth)acryliques ;
iii) la formule (IV) : 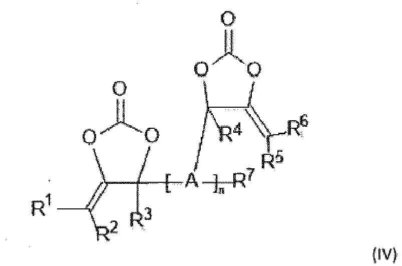 dans laquelle :
R1 à R6 sont, indépendamment les uns des autres, un atome d'hydrogène ou un groupe organique fonctionnel ;
R7 est un atome d'hydrogène, un groupe OH ou un groupe organique fonctionnel ;
A est un groupe de liaison organique sans siloxane, à l'exception d'un groupe de liaison formé par polymérisation de monomères (méth)acryliques ; et
n est un nombre qui est supérieur ou égal à 1, de préférence de 1 à 10 ; ou
iv) la formule (V) : 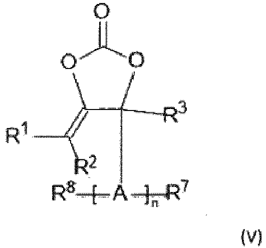 dans laquelle :
R1 à R3 sont, indépendamment les uns des autres, un atome d'hydrogène ou un groupe organique fonctionnel ;
R7 et R8 sont, indépendamment l'un de l'autre, un atome d'hydrogène, un groupe OH ou un groupe organique fonctionnel, et R7 et/ou R8 peuvent contenir un groupe carbonate cyclique d'exo-vinylène ;
A est un groupe de liaison organique sans siloxane, à l'exception d'un groupe de liaison formé par polymérisation de monomères (méth)acryliques ; et
n est un nombre qui est supérieur ou égal à 1, si l'un au moins des groupes fonctionnels R7 et R8 contient au moins un groupe carbonate cyclique d'exo-vinylène, et n est un nombre qui est supérieur ou égal à 2, de préférence de 2 à 10, si aucun des groupes fonctionnels R7 et R8 ne contient un groupe carbonate cyclique d'exo-vinylène.

4. Composition à deux composants selon la revendication 3, dans laquelle -A dans lesdites formules (II), (IV) et (V) a au moins un groupe acétal.

5. Composition à deux composants selon l'une quelconque des revendications 1 à 4, dans laquelle la quantité totale d'agent durcisseur multifonctionnel présent dans le second composant est choisie de sorte que le rapport molaire des groupes fonctionnels alkylidène-1,3-dioxolan-2-one dudit premier composant aux groupes fonctionnels (F) dans l'agent durcisseur est dans la plage de 1:10 à 10:1, de préférence dans la plage de 1:2 à 2:1.

6. Composition à deux composants selon l'une quelconque des revendications 1 à 5, dans laquelle la quantité totale d'agent durcisseur multifonctionnel présent dans le second composant est de 0,1 à 50 % en poids, de préférence de 1 à 30 % en poids, par rapport à la quantité totale combinée des composés carbonate cycliques d'exo-vinylène et desdits agents durcisseurs multifonctionnels.

7. Composition à deux composants selon l'une quelconque des revendications 1 à 6, dans laquelle les groupes fonctionnels (F) de l'agent durcisseur sont choisis dans le groupe constitué : des groupes hydroxyle aliphatiques ; des groupes amino primaires aliphatiques ; des groupes amino secondaires aliphatiques ; et des mélanges de ceux-ci.

8. Composition à deux composants selon l'une quelconque des revendications 1 à 7, dans laquelle l'agent durcisseur multifonctionnel comprend au moins un parmi une polyétheramine multifonctionnelle et une amine difonctionnelle choisie dans le groupe constitué des diamines aliphatiques, cycloaliphatiques et aromatiques.

9. Composition à deux composants selon l'une quelconque des revendications 1 à 8, dans laquelle l'agent durcisseur multifonctionnel comprend un ou plusieurs alcools choisis dans les groupes constitués du : 1,4-butanediol ; éthylène glycol ; diéthylène glycol ; triéthylène glycol ; néopentyl glycol ; 1,3-propanediol ; 1,5-pentanediol ; 1,6-hexanediol ; glycérol ; diglycérol ; pentaérythritol ; dipentaérythritol ; et des alcools de sucre, tels que le sorbitol et le mannitol.

10. Composition à deux composants selon l'une quelconque des revendications 1 à 9, dans laquelle :
l'agent durcisseur multifonctionnel comprend un ou plusieurs polyols polymères choisis dans le groupe constitué des polyester polyols, des polycarbonate polyols, des polyéther polyols, des polyacrylate polyols et des poly(alcools vinyliques) ; et
lesdits agents durcisseurs de type polyol polymère sont **caractérisés par** une ou plusieurs des propriétés suivantes :
i) une fonctionnalité OH moyenne d'au moins 1,5 mol ;
ii) une masse moléculaire moyenne en nombre (Mn) de 250 à 50 000 g/mol ; et
iii) au moins 50 % en moles des groupes hydroxyle contenus dans le polyol polymère étant des groupes hydroxyle primaires.

11. Composition à deux composants selon l'une quelconque des revendications 1 à 10 comprenant en outre un catalyseur en une quantité de 0,01 à 10 % en poids, de préférence de 0,01 à 5 % en poids, par rapport au poids total de la composition à deux composants.

12. Composition à deux composants selon l'une quelconque des revendications 1 à 11 comprenant moins de 0,1 % en poids, par rapport au poids de la composition à deux composants, d'eau.

13. Composition à deux composants selon l'une quelconque des revendications 1 à 12 comprenant moins de 0,1 % en poids, par rapport au poids de la composition à deux composants, de groupes NCO.

14. Procédé de formation d'un article composite comprenant les étapes de :
a) fourniture d'un premier et d'un second substrats ;
b) application de la composition à deux composants telle que définie dans l'une quelconque des revendications 1 à 13 sur l'un au moins desdits substrats ; et
c) assemblage desdits premier et second substrats.
